# EUROPEAN PATENT APPLICATION

(11) **EP 3 968 581 A1**
(43) Date of publication of application: **16.03.2022**
(21) Application number: 20834222.0
(22) Date of filing: 20.06.2020
(51) Int. Cl.: H04L 12/723

(54) **METHOD AND RELATED DEVICE FOR FORWARDING PACKETS IN DATA CENTER NETWORK**

(30) Priority: 29.06.2019 CN 201910582515
(71) Applicant: Huawei Technologies Co., Ltd., Longgang District Shenzhen, Guangdong 518129 (CN)
(72) Inventor: LI, Fengkai, Shenzhen, Guangdong 518129 (CN); QIN, Yun, Shenzhen, Guangdong 518129 (CN); XIA, Yinben, Shenzhen, Guangdong 518129 (CN); LIU, Yashe, Shenzhen, Guangdong 518129 (CN); ZHENG, Shengwei, Shenzhen, Guangdong 518129 (CN); LU, Shengwen, Shenzhen, Guangdong 518129 (CN); ZHOU, Yigang, Shenzhen, Guangdong 518129 (CN)
(74) Representative: Goddar, Heinz J.
(86) International application number: PCT/CN2020/097271
(87) International publication number: WO 2021/000752

(57) **Abstract**

This application discloses a method for forwarding a packet in a data center network. A first device obtains an original packet, and adds a first source label to the original packet to obtain a first packet. The first source label includes a forwarding type, an indication field, and an interface sequence. The forwarding type indicates that the first packet supports source label forwarding, the interface sequence indicates a first source label forwarding path of the original packet, and the indication field indicates information that is about an outbound interface and that should be read from the interface sequence. The first device sends the first packet to a next-hop switch through the outbound interface corresponding to the first source label forwarding path. The next-hop switch receives the first packet, and forwards the first packet based on the first source label. According to this application, a switch in the data center network can forward a packet without searching for a forwarding table. This increases packet forwarding efficiency and reduces load of the switch.

## Description

This application claims priority to Chinese Patent Application No. 201910582515.X, filed with the China National Intellectual Property Administration on June 29, 2019, and entitled "METHOD FOR FORWARDING PACKET IN DATA CENTER NETWORK AND RELATED APPARATUS", which is incorporated herein by reference in its entirety.

### TECHNICAL FIELD

The present invention relates to network communications technologies, and in particular, to a method for forwarding a packet in a data center network and a related apparatus.

### BACKGROUND

A data center is a resource pool including computing resources, storage resources, and network resources. A data center network (DCN) interconnects to all of the resources of the data center. The data center network needs to be scalable and effective to connect tens of millions of servers. To reduce costs of the DCN and improve robustness, currently, a Clos architecture is generally used for the DCN.

### SUMMARY

This application provides a packet sending method and a related apparatus, to increase efficiency of forwarding a packet in a data center network.

A first aspect of this application provides a packet sending method. The method is performed by a first device, and the first device may be a source server or a source access switch.

The first device obtains an original packet, and adds a first source label to the original packet to obtain a first packet. The first source label includes a forwarding type, an indication field, and an interface sequence. The forwarding type indicates that the first packet supports source label forwarding, the interface sequence indicates a first source label forwarding path of the original packet, and the indication field indicates information that is about an outbound interface and that should be read from the interface sequence. The first device sends the first packet through an outbound interface corresponding to the first source label forwarding path.

In this application, after the first device adds the first source label to the original packet to obtain the first packet, a switch that receives the first packet forwards the first packet based on the first source label, and does not need to search for a forwarding table when forwarding the first packet. This forwarding manner can increase packet forwarding efficiency. In addition, because the switch that receives the first packet does not need to store the forwarding table, storage space of the switch is saved.

In an implementation, the first source label further includes a packet type and a fault field. The packet type indicates that the first packet is a normal packet, and a value of the fault field is a default value.

The first source label in this application further includes the packet type and the fault field. When the source label forwarding path is faulty, a switch in which a faulty outbound interface is located may modify the packet type and the fault field in the first packet, generate a reverse packet of the first packet, and notify the first device of the faulty outbound interface by using the reverse packet.

Optionally, when the source label forwarding path is faulty, the first device further receives a second packet, where the second packet is a reverse packet of the first packet. The second packet includes a second source label, and the second source label includes a packet type, an interface sequence, and a fault field. The packet type indicates that the second packet is a fault reroute packet, the interface sequence indicates the first source label forwarding path, and the fault field is combined with the interface sequence to indicate the faulty outbound interface on the first source label forwarding path. The first device obtains the original packet based on the second packet, and determines a second source label forwarding path of the original packet, where the second source label forwarding path does not include the faulty outbound interface. The first device generates a third source label based on the second source label forwarding path, and generates a third packet based on the original packet and the third source label. The first device sends the third packet through an outbound interface corresponding to the second source label forwarding path.

In this application, when the source label forwarding path is faulty, the switch in which the faulty outbound interface is located generates the second packet based on the first packet, and sends the second packet to the first device along a reverse path of the first source label forwarding path. Each of payload of the second packet and payload of the first packet is payload of the original packet. After receiving the second packet, the first device may determine the original packet, and reselect the second source label forwarding path for the original packet to avoid the faulty outbound interface. Then, the first device generates the third packet based on the original packet and the second source label forwarding path, and forwards the third packet through the outbound interface corresponding to the second source label forwarding path. Because both the third packet and the first packet are generated based on the original packet, when there is the faulty outbound interface on the first source label forwarding path, data that needs to be transmitted is not lost by using a processing process provided in this application. When this implementation is applied to a data center network, a requirement of no packet loss in the data center network can be met.

In an implementation, when adding the first source label to the original packet, the first device obtains information about a destination access switch corresponding to the original packet, and determines, based on the information about the destination access switch, a first forwarding path corresponding to the destination access switch. Then, the first device determines the first source label forwarding path based on the first forwarding path and according to a first rule, generates the first source label based on the first source label forwarding path and according to a second rule, and adds the first source label to the original packet.

In this implementation, the first device may determine different first source label forwarding paths according to different first rules, so that the implementation of the method provided in this application is more flexible.

Optionally, the first forwarding path is a forwarding path from the source access switch to the destination access switch, and the first source label forwarding path is the first forwarding path. The source access switch receives the original packet sent by a source server. The source access switch determines an inbound interface for receiving the original packet, and determines the outbound interface indicated by the indication field of the first packet. The source access switch modifies the information that is about the outbound interface and that is in the interface sequence of the first packet to information about the inbound interface, and modifies a value of the indication field to a value that should be read by a next-hop switch, to obtain a modified first packet. The source access switch forwards the modified first packet through the determined outbound interface.

Optionally, the first forwarding path is a forwarding path from the source access switch to the destination access switch, and the first source label forwarding path does not include an outbound interface of the source access switch on the first forwarding path. The source access switch receives the original packet sent by a source server. The source access switch forwards the first packet through the outbound interface of the source access switch on the first forwarding path.

Optionally, the first forwarding path is a forwarding path from the source server to the destination access switch, and the first source label forwarding path does not include an outbound interface of the source server on the first forwarding path. The source server obtains the original packet. The source server forwards the first packet through the outbound interface of the source server on the first forwarding path.

The method according to the first aspect of this application may be performed by the source server, or may be performed by the source access switch. This implements flexible deployment of the method, and can meet different networking requirements.

A second aspect of this application provides another packet sending method. The method is performed by a second device, and the second device may be a switch.

The switch receives a first packet, where the first packet is obtained by adding a first source label to an original packet. The first source label includes a forwarding type, an indication field, and an interface sequence. The forwarding type indicates that the first packet supports source label forwarding, the interface sequence indicates a source label forwarding path of the original packet, and the indication field indicates information that is about an outbound interface and that should be read from the interface sequence. The switch sends the first packet based on the first source label.

Optionally, when sending the first packet based on the first source label, the switch determines the outbound interface indicated by the indication field, obtains a status of the outbound interface, and sends the first packet based on the status of the outbound interface.

In this application, the switch that receives the first packet can forward the first packet based on only the first source label of the first packet, and does not need to search for a forwarding table. Therefore, packet forwarding efficiency is increased. In addition, because the switch does not need to search for the forwarding table, and correspondingly, the switch does not need to store the forwarding table, storage space of the switch can be saved in this application. Further, because the switch does not need to store the forwarding table, and the switch does not need to generate the forwarding table, complexity of the switch can be further reduced in this application, thereby reducing complexity of a network including the switch, and reducing networking costs.

Optionally, the switch further determines an inbound interface for receiving the first packet. When the status of the outbound interface is normal, the switch modifies the information that is about the outbound interface and that is in the interface sequence to information about the inbound interface, and modifies a value of the indication field to a value that should be read by a next-hop switch, to obtain a modified first packet. The switch forwards the modified first packet to the next-hop switch through the outbound interface. The next-hop switch is a next-hop switch facing a destination server of the original packet.

According to the method in which the switch forwards the first packet based on the first source label and that is provided in this application, not only the packet can be forwarded, but also an inbound interface that is of the first packet and that is of each switch on the source label forwarding path can be recorded in the first packet, so that the destination server or a destination access switch that receives the first packet can determine a source label forwarding path corresponding to a source server.

Optionally, the first packet further includes a source address and a destination address, and the first source label further includes a packet type and a fault field. The switch further determines an inbound interface for receiving the first packet. When the status of the outbound interface is faulty, the switch writes a value of the indication field into the fault field, then modifies the value of the indication field to a value that should be read by a next-hop switch, modifies the packet type to fault reroute, and exchanges the source address and the destination address of the first packet, to obtain a reverse packet of the first packet. The switch forwards the reverse packet through the inbound interface. The next-hop switch is a next-hop switch facing a source server of the original packet.

In this application, when the outbound interface on the source label forwarding path is faulty, the switch that receives the first packet may generate the reverse packet of the first packet, and send the reverse packet to the first device along a reverse path of the source label forwarding path, so that the first device reselects a source label forwarding path for the original packet of the first packet. This can avoid loss of the original packet when the source label forwarding path is faulty.

Optionally, the switch determines an inbound interface for receiving the first packet. When the status of the outbound interface is faulty, the switch determines a new outbound interface having a same direction as the outbound interface, modifies the information that is about the faulty outbound interface and that is in the interface sequence to information about the inbound interface, and modifies a value of the indication field to a value that should be read by a next-hop switch, to obtain a modified first packet. The switch forwards the modified first packet to the next-hop switch through the new outbound interface. The next-hop switch is a next-hop switch facing a destination server of the original packet.

In this application, when the outbound interface on the source label forwarding path is faulty, the switch that receives the first packet selects the new outbound interface having the same direction as the faulty outbound interface, and sends the first packet through the new outbound interface. This can avoid packet loss and reduce a packet delay when the source label forwarding path is faulty.

Optionally, when the switch is a last-hop switch corresponding to the source label forwarding path, the switch further determines an inbound interface for receiving the first packet. When the status of the outbound interface is normal, the information that is about the outbound interface and that is in the interface sequence is modified to information about the inbound interface, to obtain a modified first packet. The switch forwards the modified first packet to a destination server of the original packet through the outbound interface.

In this application, after writing access information of the first packet on the inbound interface of the switch into the first source label, the last-hop switch corresponding to the source label forwarding path sends the modified first packet to the destination server of the original packet. In this way, the destination server may obtain, based on the interface sequence in the first source label, a source label forwarding path corresponding to a source access switch of the original packet. This increases efficiency of obtaining the source label forwarding path by the destination server.

Optionally, when the switch is a last-hop switch corresponding to the source label forwarding path, if the status of the outbound interface is normal, the switch deletes the first source label from the first packet to obtain the original packet, and sends the original packet to a destination server of the original packet through the outbound interface.

Further, the switch may further obtain the interface sequence recorded in the first source label, and determine, based on the interface sequence, a source label forwarding path corresponding to the source access switch of the original packet. This increases efficiency of obtaining the source label forwarding path by the destination access switch.

Optionally, the first source label further includes a forwarding mode, and the forwarding mode indicates a manner of determining the outbound interface. When the forwarding mode is direct forwarding, the information in the interface sequence is outbound interface identifiers, and the switch obtains, from the interface sequence, an outbound interface identifier corresponding to the indication field, and determines, based on the outbound interface identifier, the outbound interface indicated by the indication field. When the forwarding mode is table lookup forwarding, the information in the interface sequence is outbound interface indexes, and the switch obtains, from the interface sequence, an outbound interface index corresponding to the indication field, searches for a mapping table based on the index to obtain an outbound interface identifier, and determines, based on the outbound interface identifier, the outbound interface indicated by the indication field.

The information in the interface sequence in this application may be the identifier or the index that can be used to find the outbound interface. Setting different information in the interface sequence can improve flexibility of the implementation of this application.

Optionally, the switch further receives a second packet, where the second packet is a reverse packet of the first packet. The second packet includes a second source label, and the second source label includes an interface sequence, an indication field, and a fault field. The indication field indicates information that is about an outbound interface and that should be read from the interface sequence, and the fault field is combined with the interface sequence to indicate a faulty outbound interface on the source label forwarding path. The switch further determines an inbound interface for receiving the second packet; determines the outbound interface indicated by the indication field; and modifies the information that is about the outbound interface and that is in the interface sequence to information about the inbound interface, and modifies a value of the indication field to a value that should be read by a next-hop switch, to obtain a modified second packet. The switch forwards the modified second packet to the next-hop switch through the determined outbound interface. The next-hop switch is a next-hop switch facing a source server of the original packet.

In this application, the switch that receives the reverse packet can forward the reverse packet to the source server or a source access switch of the original packet, to avoid a packet loss when the source label forwarding path is faulty.

The first aspect and the second aspect explain different implementations of the packet forwarding method in this application. The foregoing implementations may be implemented by using devices in different forms.

A third aspect of this application provides a packet sending apparatus. The apparatus includes function modules that perform the packet sending method provided in any one of the first aspect or the possible designs of the first aspect. Division into the function modules is not limited in this application. The function modules may be correspondingly divided according to procedure steps of the packet forwarding method in the first aspect, or the function modules may be divided based on a specific implementation requirement.

A fourth aspect of this application provides another packet sending apparatus. The apparatus includes function modules that perform the packet sending method provided in any one of the second aspect or the possible designs of the second aspect. Division into the function modules is not limited in this application. The function modules may be correspondingly divided according to procedure steps of the packet forwarding method in the second aspect, or the function modules may be divided based on a specific implementation requirement.

A fifth aspect of this application provides still another packet sending apparatus. The apparatus includes a memory and a processor. The memory is configured to store program code and data. The processor is configured to: invoke the program code, implement, with reference to the data, the packet sending method in any one of the first aspect of this application and the possible designs of the first aspect, and the packet sending method in any one of the second aspect of this application and the possible designs of the second aspect.

A sixth aspect of this application provides a chip. When running, the chip can implement the packet sending method in any one of the first aspect of this application and the possible designs of the first aspect, and implement the packet sending method in any one of the second aspect of this application and the possible designs of the second aspect.

A seventh aspect of this application provides a storage medium, where the storage medium stores program code. When the program code is run, a device (a switch, a server, or the like) that runs the program code can implement the packet sending method in any one of the first aspect of this application and the possible designs of the first aspect, and implement the packet sending method in any one of the second aspect of this application and the possible designs of the second aspect.

An eighth aspect of this application provides a data center network, and the data center network includes a first device and a second device. The first device is configured to implement the packet sending method in any one of the first aspect of this application and the possible designs of the first aspect, and the second device is configured to implement the packet sending method in any one of the second aspect of this application and the possible designs of the second aspect.

For beneficial effects of the third aspect to the eighth aspect of this application, refer to the descriptions of the beneficial effects of the first aspect and the second aspect and the possible designs of the first aspect and the second aspect. Details are not described herein again.

### BRIEF DESCRIPTION OF DRAWINGS

FIG. 1 is a schematic diagram of a data center network according to an embodiment of this application;
FIG. 2 is a schematic structural diagram of a source label according to an embodiment of this application;
FIG. 3 is a schematic flowchart of a packet sending method according to an embodiment of this application;
FIG. 4 is a schematic flowchart of another packet sending method according to an embodiment of this application;
FIG. 5 is a schematic diagram of a path along which a server 1 sends a packet to a server 2;
FIG. 6A to FIG. 6F are schematic diagrams of source labels on different devices when a normal packet is forwarded;
FIG. 7A to FIG. 7D are schematic diagrams of source labels on different devices when a forwarding path is faulty;
FIG. 8 is a schematic structural diagram of a packet sending apparatus according to an embodiment of this application;
FIG. 9 is a schematic structural diagram of another packet sending apparatus according to an embodiment of this application; and
FIG. 10 is a schematic structural diagram of still another packet sending apparatus according to an embodiment of this application.

### DESCRIPTION OF EMBODIMENTS

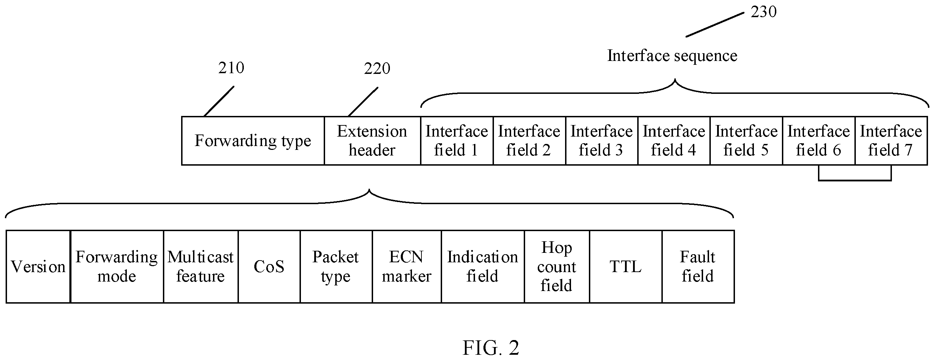

The following first briefly describes related terms in embodiments of this application, to help a person skilled in the art have a better understanding.
(1) Clos architecture: The Clos architecture is also referred to as a Clos network, and is an ideal multistage switching system in theory. The Clos architecture was invented by Edson Erwin in 1938 and formalized by Charles Clos in 1952. The Clos architecture is a non-blocking network, and can implement communication between any two hosts in the network.
(2) Access layer: In a data center network, a virtual server or physical server is directly connected to the access layer. The access layer includes access switches. The access switch may also be referred to as a top of rack (TOR) switch.
(3) Aggregation layer: The aggregation layer connects to different access switches and includes an aggregation switch. In the data center network, the aggregation switch connects to a large quantity of ToR switches. The aggregation switch may also be referred to as a leaf (leaf) switch.
(4) Spine layer: The spine layer connects to an aggregation switch, and is used as a gateway of the data center network to connect to an external network. The spine layer includes spine switches. The spine layer is also referred to as a core layer.
(5) Point of delivery (pod): The point of delivery is a cluster that includes components such as a network, a computing node, a storage node, and an application and that is used to transmit network services. The point of delivery is also referred to as an available zone. In the embodiments of this application, the pod is a cluster including access switches and an aggregation switches.
(6) Network topology: The network topology refers to arrangement between elements (such as links and nodes) in a communication network. The network topology includes a physical topology and a logical topology. The physical topology refers to deployment of network components. The logical topology refers to a communication relationship between network nodes at a service layer. In this application, the network topology is the physical topology, and may also be referred to as a topology for short.
(7) Source label: The source label is a set of a series of fields extended in this application and added to a packet to guide packet forwarding. In this application, the source label is used to guide packet forwarding, and does not modify payload of the packet. The source label is subsequently described in detail with reference to FIG. 2.
(8) Original packet: An original packet is a packet to which no source label is added. An encapsulation format and a used protocol of the original packet are not limited in this application.
(9) Interface: The interface is a connection point between two devices or protocol layers in a computer network. An interface for receiving a packet is referred to as an inbound interface of the packet, and an interface for sending a packet is referred to as an outbound interface of the packet. A same interface may be both an inbound interface of a packet A and an outbound interface of a packet B.
(10) Forwarding path: The forwarding path is a path from a first device to a destination access switch, and includes an outbound interface of the first device. In this application, the first device is a device that adds a source label to a packet.
(11) Source label forwarding path: The source label forwarding path is a path added to a source label, and may include or not include an outbound interface of a first device. In the specification and claims of this application, the terms "first", "second", and the like are intended to distinguish between different objects but do not indicate a particular sequence of the objects. For example, a first data packet, a second data packet, and the like are used to distinguish between different data packets, but are not used to describe a particular sequence of the data packets.

In the embodiments of the present invention, the word "exemplary" or "for example" is used to represent giving an example, an illustration, or a description. Any embodiment or design scheme described as an "exemplary" or "for example" in the embodiments of the present invention should not be explained as being more preferred or having more advantages than another embodiment or design scheme. Exactly, use of the word "exemplary" or "for example" is intended to present a relative concept in a specific manner.

In descriptions of the present invention, unless otherwise specified, "a plurality of' means two or more than two. For example, a plurality of switches refer to two or more switches.

To make objectives, technical solutions, and advantages of this application clearer, the following further describes this application in detail with reference to accompanying drawings.

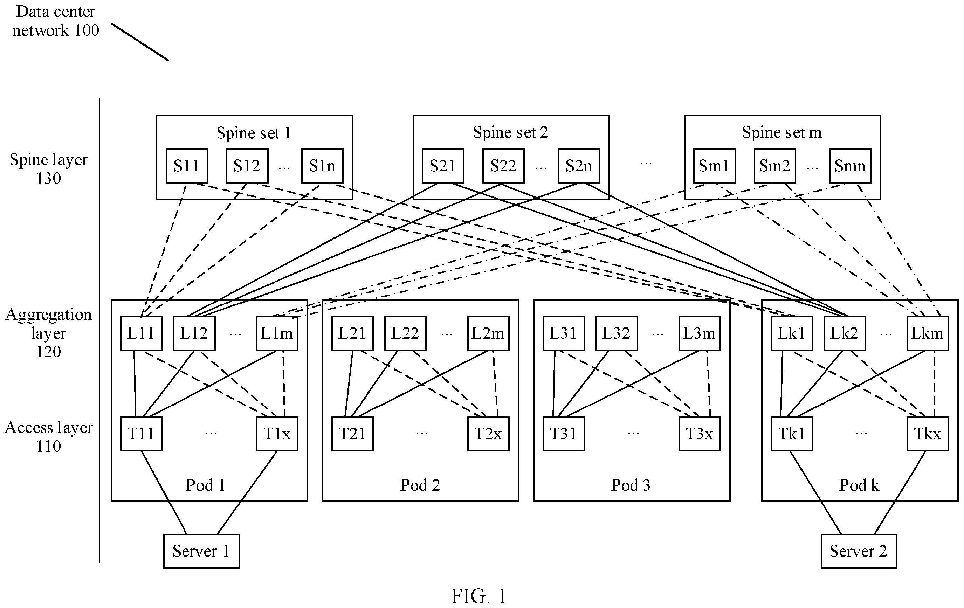

FIG. 1 is a schematic diagram of a data center network applicable to an embodiment of this application. The data center network 100 shown in FIG. 1 uses a Clos architecture. The data center network 100 includes an access layer 110, an aggregation layer 120, and a spine layer 130. Spine switches at the spine layer 130 are divided into m spine sets. Each spine set includes n spine switches, for example, S11 to S1n in a spine set 1. Access switches (ToR switches) at the access layer 110 and aggregation switches (leaf switches) at the aggregation layer 120 are divided into k pods, and each pod includes x ToR switches and m leaf switches. That is, a quantity of leaf switches in each pod is the same as a quantity of spine sets. In one pod, each ToR switch is separately connected to m leaf switches in the pod, and each leaf switch is connected to all spine switches in a corresponding spine set. For example, in a pod 1, a ToR switch T11 is separately connected to leaf switches L11 to L1m, a ToR switch T1x is separately connected to the leaf switches L11 to L1m, the leaf switch L11 is connected to all spine switches (first dashed lines) in the spine set 1, the leaf switch L12 is connected to all spine switches (solid lines) in a spine set 2, and the leaf switch L1m is connected to all spine switches (second dashed lines) in a spine set m. Similarly, in a pod k, a ToR switch Tk1 is separately connected to leaf switches Lk1 to Lkm, a ToR switch Tkx is separately connected to the leaf switches Lk1 to Lkm, the leaf switch Lk1 is connected to all the spine switches (the first dashed lines) in the spine set 1, the leaf switch Lk2 is connected to all the spine switches (the solid lines) in the spine set 2, and the leaf switch Lkm is connected to all the spine switches (the second dashed lines) in the spine set m. Connection manners between ToR switches and leaf switches in other pods are similar to a connection manner between ToR switches and the leaf switches in the pod 1 and a connection manner between ToR switches and the leaf switches in the pod k. The ToR switch at the access layer 110 is configured to connect to a server. FIG. 1 shows a server 1 and a server 2.

FIG. 1 is merely an example of the data center network. To simplify description, each pod in the data center network in FIG. 1 includes a same quantity of ToR switches and leaf switches, and each spine set includes a same quantity of spine switches. In actual deployment, quantities of ToR switches in different pods may be different, and quantities of spine switches in different spine sets may also be different. Each ToR switch may be connected to a plurality of servers, and each server may be connected to one or more ToR switches. Generally, each server is connected to different ToR switches in a same pod. The Clos architecture in FIG. 1 includes three layers of switches. However, in actual deployment, the Clos architecture may further include four or more layers of switches. A quantity of layers of switches does not affect implementation of the present invention.

It can be seen from FIG. 1 that, when the server 1 sends a message to the server 2, there may be m forwarding manners:
pod 1 -> spine set 1 -> pod k;
pod 1 -> spine set 2 -> pod k;
pod 1 -> spine set m -> pod k.

In the foregoing m forwarding manners, m forwarding planes are formed. Each forwarding plane includes spine switches in a spine set and all leaf switches connected to the spine switches in the spine set. For example, a forwarding plane corresponding to the spine set 2 includes Li2 in each of the pod 1 to the pod k, where i = 1, ..., k, and all the spine switches S21 to S2n in the spine set 2.

When each pod includes the same quantity of ToR switches and leaf switches, and each spine set includes the same quantity of spine switches, forwarding paths of a packet in the m forwarding planes are the same. In other words, the m forwarding planes include a plurality of equal-cost forwarding paths from the server 1 to the server 2.

With the data center network shown in FIG. 1, different servers in the data center can communicate with each other without blocking. Some or all of the servers in FIG. 1 may be virtual servers or physical servers. The virtual server may be a virtual machine running on the physical server.

The data center network shown in FIG. 1 may further include a controller. The controller is configured to: collect a topology of the data center network, and send the collected topology to each server in the data center network. The controller may be deployed on a ToR switch (for example, a ToR switch T21 in the pod 2). The ToR switch collects the topology of the data center network, and sends the topology to each server. The controller may alternatively be independently deployed and connected to one or more switches in the data center network. The controller obtains the topology of the data center network through the one or more switches, and sends the obtained topology to each server in the data center network.

FIG. 2 is a schematic structural diagram of a source label according to an embodiment of this application. When the source label is added to a packet, the source label is used to guide forwarding of the packet. As shown in FIG. 2, in an implementation, for ease of description, the source label is divided into three parts, namely, a forwarding type 210, an extension header 220, and an interface sequence 230. The forwarding type 210 indicates whether the packet to which the source label is added supports source label forwarding. Optionally, an added Ethernet protocol type may be defined to indicate that the packet supports source label forwarding. If a type of the source label carried in the packet is the added type, the packet supports source label forwarding. If the type of the source label carried in the packet is another type, the packet does not support source label forwarding. The added type supporting source label forwarding may be, for example, 0X8950. The source label further includes a plurality of fields, and each of the plurality of fields is related to one parameter. For ease of description, the plurality of fields are collectively referred to as the extension header 220 in this embodiment of this application. For example, in FIG. 2, the extension header 220 includes the following fields.

Aversion is a version number of the source label.

A forwarding mode indicates a manner of determining an outbound interface when the packet is forwarded based on the source label. For example, the forwarding mode may be direct forwarding or table lookup forwarding. The direct forwarding means that the interface sequence 230 includes an identifier of the outbound interface, and a switch may directly forward the packet based on the identifier that is of the outbound interface and that is in the interface sequence. The table lookup forwarding means that the interface sequence 230 includes an index of the outbound interface in a mapping table. The switch needs to search the mapping table based on the index of the outbound interface to obtain an identifier of the outbound interface, and then forwards the packet based on the identifier of the outbound interface. The mapping table stores a correspondence between the index and the identifier of the outbound interface.

A multicast feature indicates whether the packet is a multicast packet.

Class of service (COS) indicates a priority of the packet.

A packet type indicates a type of the packet, where the type may include normal (indicating that the packet is a normal packet), fault reroute (indicating that the packet is a reverse packet), packet loss notification (used to notify that a packet loss occurs in a network), or the like. This field may also be referred to as reroute (reRoute). Different values may be used to indicate different packet types, for example, 0 for normal, 1 for fault reroute, and 2 for packet loss notification. The normal packet is a packet sent from a source server to a destination server. The reverse packet is a packet sent back to the source server due to a forwarding path fault. The packet loss notification is a notification packet sent by a switch that discards the packet to the source server after the packet is discarded.

An explicit congestion notification (ECN) marker is a standard ECN-based congestion marking mode.

An indication field is a field whose value points to a field that is of the interface sequence 230 and that should be read. A switch that performs source routing and forwarding may obtain information about the outbound interface based on the value of the indication field and the interface sequence 230. In other words, the indication field may indicate the information that is about the outbound interface and that should be read from the interface sequence 230. In this application, an initial value of the indication field and a modification rule of the indication field need to be preset, and each switch is notified of the preset initial value and the set modification rule.

A hop count field indicates a total quantity of hops of a source label forwarding path corresponding to the source label, namely, a quantity of valid interfaces in the interface sequence 230. The switch may determine, based on the value of the indication field and a value of the hop count field, whether the switch is a last hop of the source label forwarding path.

Time to live (TTL) is maximum quantity of times that the packet can be forwarded, and is mainly used in a fault reroute scenario. A value of the TTL decreases by 1 each time the packet is forwarded.

A fault field indicates a location of a fault occurring on the source label forwarding path, and a value of the fault field may be, for example, an N^{th} hop of the source label forwarding path. N is less than or equal to the total quantity of hops of the source label forwarding path. The fault field is combined with the interface sequence 230 to determine a faulty outbound interface. Only when the packet type is fault reroute or packet loss notification, the value of the fault field is valid, in other words, the switch needs to pay attention to the value of the fault field. When the packet type is normal, the value of the fault field is a default value. A switch that receives the packet does not need to pay attention to the fault field.

In actual deployment, fields in the extension header 220 may be less than the foregoing fields or more than the foregoing fields. For example, the extension header 220 may further include a reserved field for a future extension function. For another example, the extension header 220 does not include the hop count field. When the switch reads the information in the interface sequence based on the value of the indication field, and the read information corresponds to an invalid outbound interface, it may be determined that the switch is the last hop of the source label forwarding path.

The interface sequence 230 indicates the source label forwarding path of the packet. The interface sequence 230 includes a plurality of interface fields. The plurality of interface fields indicate an outbound interface of each hop of switch on the source label forwarding path by using an identifier or index of the outbound interface. In other words, the plurality of interface fields include the identifier or index of the outbound interface of each hop of switch on the source label forwarding path. A quantity of the plurality of interface fields is greater than or equal to the total quantity of hops of the source label forwarding path. The source label forwarding path is a path for forwarding by using the source label. For example, the interface sequence 230 in FIG. 2 includes seven interface fields. Actually, the interface sequence may alternatively include another quantity of interface fields. When the source label shown in FIG. 2 is added to the packet, the source label may guide forwarding of the packet. In this application, different source labels added to different packets have a same format, but may have different field values. For brevity of the specification, in subsequent embodiments of this application, only fields that need to be used when specific steps are performed are described.

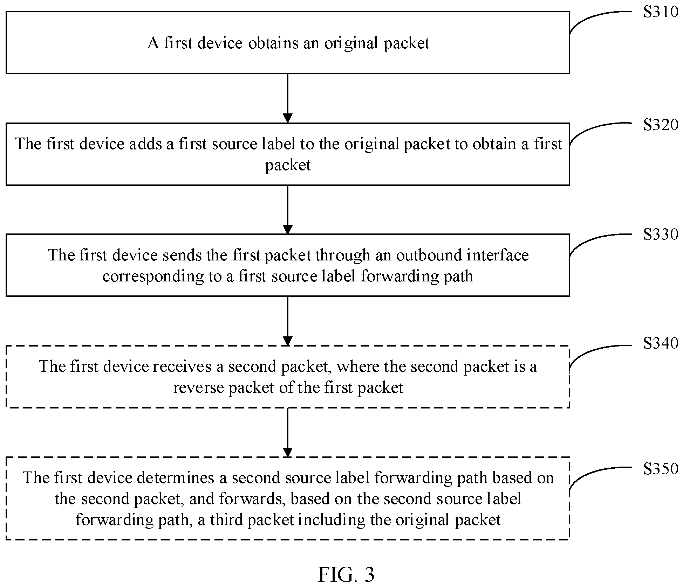

Based on the data center network shown in FIG. 1 and the source label shown in FIG. 2, an embodiment of this application provides a packet sending method. The method is performed by a first device. As shown in FIG. 3, the method includes at least steps S310 to S330.

In S310, the first device obtains an original packet.

The first device may be a server or a source access switch, namely, a source ToR switch. The server may be a physical server or a virtual server. The original packet is a packet to which no source label is added. In this application, the packet to which no source label is added is referred to as the original packet, and a protocol followed by the packet or an encapsulation mode used by the packet is not considered. The original packet may be a data packet or a control packet.

When the first device is the server, the original packet may be generated by the server, or may be generated by a virtual machine on the server. When the first device is the source access switch, the original packet is received from a server (a source server) connected to the source access switch.

In S320, the first device adds a first source label to the original packet to obtain a first packet.

The first source label may be determined by the first device based on information about a destination access switch corresponding to the original packet. The destination access switch is a switch connected to a destination server. For example, when the original packet is a packet sent to the server 2 in FIG. 1, the destination access switch may be the ToR switch Tk1 or Tk2. The information about the destination access switch may be a MAC address, an IP address, a device identifier, or the like of the destination access switch.

In an implementation, the first device obtains a destination MAC address or a destination IP address of the original packet, obtains information about a corresponding destination access switch based on the destination MAC address or the destination IP address, determines, based on the information about the destination access switch, a first forwarding path corresponding to the destination switch, determines a first source label forwarding path based on the first forwarding path and according to a first rule, generates the first source label based on the first forwarding path and according to a second rule, and adds the first source label to the original packet. The first forwarding path may be any forwarding path between the first device and the destination access switch. The first rule indicates how to generate the source label forwarding path based on the forwarding path, and the first rule may include: determining the forwarding path as the source label forwarding path, or using a part of the forwarding path as the source label forwarding path. According to the first rule, a relationship between the first forwarding path and the first source label forwarding path may include the following several types.
(1) The first device is the source server, the first forwarding path is a path from an outbound interface of the source server to the destination access switch, and the first source label forwarding path is a part of the first forwarding path other than the outbound interface of the source server, in other words, the first source label forwarding path does not include the outbound interface of the source server on the first forwarding path.
(2) The first device is the source access switch, and the first forwarding path is a path from an outbound interface of the source access switch to the destination access switch, in other words, the first source label forwarding path is the first forwarding path.
(3) The first device is the source access switch, the first forwarding path is a path from an outbound interface of the source access switch to the destination access switch, and the first source label forwarding path is a part of the first forwarding path other than the outbound interface of the source access switch, in other words, the first source label forwarding path does not include the outbound interface of the source access switch on the first forwarding path.

The first forwarding path may be obtained by searching a forwarding table based on the information about the destination access switch. Each entry of the forwarding table includes a correspondence between information about an access switch and a forwarding path. In the forwarding table, each access switch corresponds to one or more forwarding paths. The forwarding table may be generated by the first device based on the topology of the data center network. Alternatively, the forwarding table may be generated by the controller and sent to the first device.

The second rule includes a length of each field and a setting mode of a value of the field. Table 1 provides an example of the second rule, and the second rule may also vary with formats of different source labels.

**Table 1**

| Fields | Lengths | Values |
|---|---|---|
| Forwarding type | 16 bits | 0X8950 |
| Version | 2 bits | The value is set based on a supported version. |
| Forwarding mode | 1 bit | The value is set based on a configuration. |
| Multicast feature | 1 bit | Unicast: 0; multicast: 1 |
| CoS | 3 bits | The value is set based on a service type. |
| Packet type | 2 bits | The value is 0 by default. |
| ECN marker | 2 bits | The value is set based on whether it is supported. |
| Indication field | 4 bits | The value is 0 by default. |
| Hop count field | 4 bits | The value is set according to calculation. |
| TTL | 4 bits | The value is set based on a network topology. |
| Fault field | b bits | The value is 0 by default. |
| Interface field 1 | 16 bits | The value is set according to calculation. |
| Interface field 2 | 16 bits | The value is set according to calculation. |
| Interface field 3 | 16 bits | The value is set according to calculation. |
| Interface field 4 | 16 bits | The value is set according to calculation. |
| Interface field 5 | 16 bits | The value is set according to calculation. |
| Interface field 6 | 16 bits | The value is set according to calculation. |
| Interface field 7 | 16 bits | The value is set according to calculation. |

In an implementation, the first source label includes a forwarding type, an indication field, and an interface sequence. The forwarding type indicates that the first packet supports source label forwarding, the interface sequence indicates the first source label forwarding path of the original packet, and the indication field indicates information that is about an outbound interface and that should be read from the interface sequence. The interface sequence includes information about an outbound interface of each hop of switch on the source label forwarding path. The information about an outbound interface may be an outbound interface identifier or an outbound interface index. An outbound interface may be directly determined based on an outbound interface identifier, or an outbound interface of a corresponding outbound interface may be found based on an outbound interface index, then the outbound interface is determined based on the outbound interface identifier.

In an implementation, the first source label may further include a packet type and a fault field. Because the first device does not select a faulty source label forwarding path when adding the first source label, the first device considers by default that the generated first packet is a normal packet. Therefore, the packet type indicates that the first packet is a normal packet, and correspondingly, a value of the fault field is a default value.

In S330, the first device sends the first packet through an outbound interface corresponding to the first source label forwarding path.

In this application, the outbound interface corresponding to the first source label forwarding path is not necessarily an outbound interface on the first source label forwarding path. When the first device is the source server, the outbound interface corresponding to the first source label forwarding path is an outbound interface that is of the source server and that is on the first forwarding path but is not on the first source label forwarding path.

When the first device is the source access switch and the destination access switch of the original packet is different from the source access switch, after generating the first packet, the source access switch sends the first packet to a next-hop switch of the source access switch, namely, a leaf switch. In an implementation, the first source label forwarding path is the first forwarding path, and the outbound interface corresponding to the first source label forwarding path is an outbound interface on the first source label forwarding path. The source access switch first determines an inbound interface for receiving the original packet; then determines the outbound interface indicated by the indication field of the first packet, and records the outbound interface; modifies the information that is about the outbound interface and that is in the interface sequence of the first packet to information about the inbound interface, and modifies a value of the indication field to a value that should be read by the next-hop switch, to obtain a modified first packet; and forwards the modified first packet through the recorded outbound interface. In another implementation, the outbound interface corresponding to the first source label forwarding path is not an outbound interface on the first source label forwarding path. In other words, the first source label forwarding path does not include the outbound interface of the source access switch on the first forwarding path. In this case, the source access switch forwards the first packet through the outbound interface of the source access switch on the first forwarding path.

In the method shown in FIG. 3 in this application, the first device adds the first source label to the original packet to obtain the first packet. The first source label includes the forwarding type, the indication field, and the interface sequence. The first device may specify a forwarding path of the original packet by adding the first source label to the original packet. A switch that receives the first packet may forward the first packet based on the first source label. This can reduce overheads caused by searching of the forwarding table. In addition, when the forwarding path is calculated and sent to the first device by the controller, each switch in this application may not need to run a routing protocol. This reduces load of the switch.

Further, in the method provided in this embodiment of this application, when the forwarding path is faulty, the first device may further reselect a forwarding path to send the original packet. As shown in FIG. 3, the method may further include steps S340 and S350.

In S340, the first device receives a second packet, where the second packet is a reverse packet of the first packet.

The second packet includes a second source label. As shown above, the second source label and the first source label have a same format, but have different values of some fields. Optionally, the second source label includes a packet type, an interface sequence, and a fault field. The packet type indicates that the second packet is a fault reroute packet, the interface sequence indicates the first source label forwarding path, and the fault field is combined with the interface sequence to indicate a faulty outbound interface on the first source label forwarding path. The fault field indicates a switch in which the faulty outbound interface is located. The first device may determine, based on a packet type of the second packet, that the second packet is a reverse packet (namely, a packet sent from the first device and returned to the first device), and then may determine the faulty outbound interface on the first source label forwarding path based on the interface sequence and the fault field.

In S350, the first device determines a second source label forwarding path based on the second packet, and forwards, based on the second source label forwarding path, a third packet including the original packet.

The first device obtains the original packet based on the second packet, and determines the second source label forwarding path of the original packet, where the second source label forwarding path does not include the faulty outbound interface. The first device generates a third source label based on the second source label forwarding path, and generates the third packet based on the original packet and the third source label, where the third source label includes the second source label forwarding path. The first device sends the third packet through an outbound interface corresponding to the second source label forwarding path.

In the foregoing manner, when the first source label path determined by the first device for the original packet is faulty, the first device may select a new forwarding path for the original packet based on a reverse packet of the original packet, add a new source label to the original packet based on the new forwarding path, and forward the original packet based on the new source label. This can ensure that the packet is not lost when a fault occurs in the data center network.

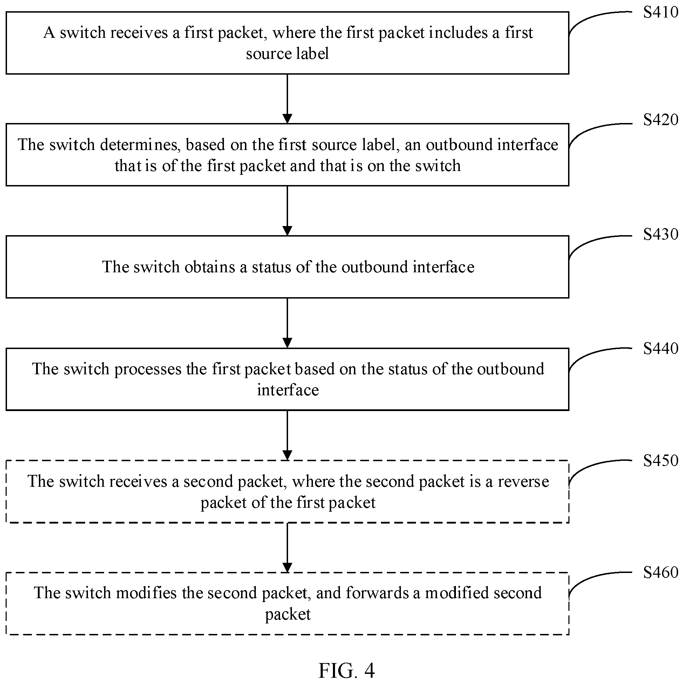

Based on the data center network shown in FIG. 1 and the method shown in FIG. 3, an embodiment of this application provides another method for sending a packet in a data center network. The method is performed by a second device, and the second device may be different switches in different scenarios. As shown in FIG. 4, the method includes steps S410 to S440.

In S410, a switch receives a first packet, where the first packet includes a first source label.

The first packet may be the first packet sent in step S330. When the first device in FIG. 3 is a source server, the switch may be any one of a ToR switch, a leaf switch, or a spine switch on a forwarding path of the first packet. When the first device in FIG. 3 is a source access switch, the switch is any switch other than the source access switch on the forwarding path of the first packet.

After S410, the switch forwards the first packet based on the first source label. The forwarding process may be implemented by using steps S420 to S440.

In S420, the switch determines, based on the first source label, an outbound interface that is of the first packet and that is on the switch.

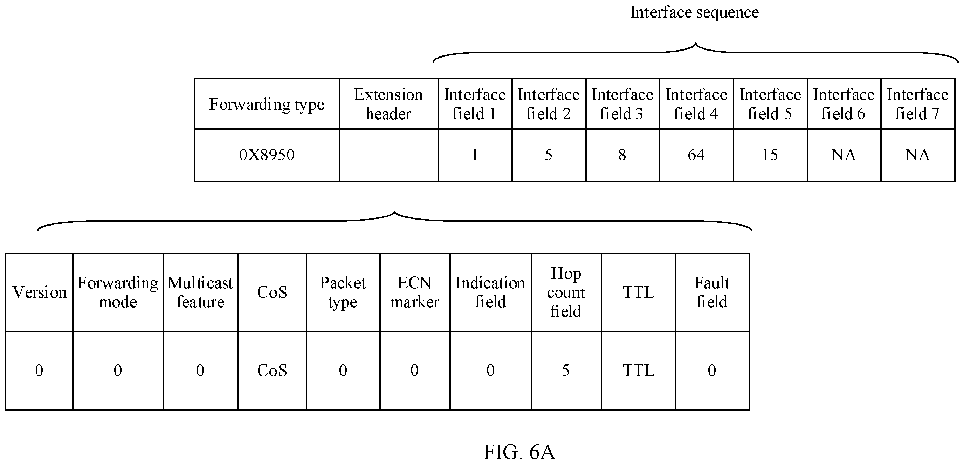

The switch parses the first packet to obtain a forwarding type in the first source label, determines, based on the forwarding type, whether the first packet supports source label forwarding, and when the first packet supports source label forwarding, determines, based on a value of an indication field and an interface sequence that are in the first source label, the outbound interface that is of the first packet and that is on the switch. The outbound interface that is of the first packet and that is on the switch is an outbound interface indicated by the indication field. A process of determining the outbound interface that is of the first packet and that is on the switch is subsequently described in detail with reference to FIG. 6A to FIG. 6F.

In addition, the switch further determines an inbound interface for receiving the first packet.

In an implementation, the first source label further includes a forwarding mode, and the forwarding mode indicates a manner of determining the outbound interface. When the forwarding mode is direct forwarding, the information in the interface sequence is outbound interface identifiers, and the switch obtains, from the interface sequence based on the value of the indication field in the first source label, an outbound interface identifier corresponding to the indication field, and determines, based on the outbound interface identifier, the outbound interface indicated by the indication field. When the forwarding mode is table lookup forwarding, the information in the interface sequence is outbound interface indexes, and the switch obtains, from the interface sequence, an outbound interface index corresponding to the indication field, searches a mapping table based on the index to obtain an identifier of the outbound interface, and determines, based on the outbound interface identifier, the outbound interface indicated by the indication field.

In S430, the switch obtains a status of the outbound interface.

The status of the outbound interface may be faulty, congested, normal, or another status set based on a requirement. The switch may obtain the status of the outbound interface from an interface status database.

In S440, the switch processes the first packet based on the status of the outbound interface.

Step S440 may specifically include the following several implementations:

A. When the status of the outbound interface is normal, the switch modifies the source label in the first packet to obtain a modified first packet, and sends the modified first packet through the outbound interface.

The following cases are included:

A1. If the switch is not a last-hop switch of a first source label forwarding path, the switch modifies information that is about the outbound interface and that is in the interface sequence to information about the inbound interface, and modifies the value of the indication field to a value that should be read by a next-hop switch, to obtain a modified first packet; and sends the modified first packet to the next-hop switch through the determined outbound interface. The next-hop device herein is a next hop when the first packet is forwarded to a destination server. Modifying the value of the indication field to the value that should be read by the next-hop switch may be adding a set value to the value of the indication field, for example, adding 1 to the value of the indication field or adding 3 to the value of the indication field.

A2. If the switch is a last hop of a first source label forwarding path, but the first source label is not added by the source access switch, the switch modifies information that is about the outbound interface and that is in the interface sequence to information about the inbound interface, to obtain a modified first packet; and sends the modified first packet to a destination server of the original packet through the determined outbound interface. Because the switch is already the last hop, the switch does not need to modify the value of the indication field.

After obtaining the modified first packet, the destination server obtains the interface sequence in the first source label, and obtains, based on the interface sequence, a source label forwarding path corresponding to the source access switch of the original packet.

A3. If the switch is a last-hop switch on the forwarding path, and the first source label is added by the source access switch, the switch deletes the source label from the first packet to obtain the original packet, and sends the original packet to a destination server.

Further, the switch may further obtain the interface sequence in the first source label, and obtain, based on the interface sequence, a source label forwarding path corresponding to the source access switch of the original packet.

B. When the status of the outbound interface is faulty, the switch performs a fault processing procedure on the first packet. The following two cases are included:

B1. The switch returns the first packet to a device that adds the first source label. For example, the switch first writes the value of the indication field in the first source label into the fault field; then modifies the value of the indication field to a value that should be read by a next-hop switch, and modifies a header of the first packet, for example, exchanges a source address and a destination address of the first packet; modifies a packet type in the first source label to fault reroute to obtain a reverse packet (which refers to a packet with an opposite forwarding path, and is also referred to as a reroute packet) of the first packet; and forwards the reverse packet through the inbound interface. The next-hop device herein is a next hop when the reverse packet is forwarded to the source server (in other words, when the reverse packet faces the source server). Modifying the value of the indication field to the value that should be read by the next-hop switch may be subtracting a set value from the value of the indication field, for example, subtracting 1 and 3 respectively from corresponding previous added values.

B2. The switch selects a new outbound interface for the first packet, where a direction of the new outbound interface is the same as a direction of the faulty outbound interface. In other words, both the new outbound interface and the faulty outbound interface face a destination server of the original packet. The switch forwards the first packet through the new outbound interface. For example, the switch modifies information that is about the faulty outbound interface and that is in the interface sequence of the first packet to information about the inbound interface, and modifies the value of the indication field to a value that should be read by a next-hop switch, to obtain a modified first packet; and forwards the modified first packet through the reselected outbound interface. Further, the switch may further generate a fault notification message, where the fault notification message is used to notify the first device of a fault of the outbound interface, so that the first device updates a source label forwarding path corresponding to a destination access switch. The next-hop device herein is a next hop when the first packet is forwarded to the destination server. Modifying the value of the indication field to the value that should be read by the next-hop switch may be adding a set value to the value of the indication field, for example, adding 1 to the value of the indication field or adding 3 to the value of the indication field.

C. When the status of the outbound interface is congested, the switch performs a congestion processing procedure on the first packet.

For example, in an implementation, the switch marks the first packet as a congestion packet and forwards the congestion packet through the outbound interface. If the first packet needs to be discarded due to congestion on the outbound interface, the switch may feed back packet loss information of the first packet to the first device, or the switch generates an independent congestion control message and sends the congestion control message to the first device. The packet loss information may include a congestion state of the outbound interface, packet loss statistics information of the outbound interface, content of a discarded packet, and the like. The congestion control message may include information such as the congestion state of the outbound interface and the packet loss statistics information of the outbound interface.

The foregoing steps reflect the process in which the switch forwards the first packet to the destination server. In an implementation, when there is a faulty outbound interface on the source label forwarding path, and a switch in which the faulty outbound interface is located returns the reverse packet of the first packet to the first device, the switch may further receive a reverse packet that is of the first packet and that is sent by another switch, and perform corresponding processing. Correspondingly, the method may further include steps S450 and S460.

In S450, the switch receives a second packet, where the second packet is a reverse packet of the first packet.

The second packet includes a second source label, and the second source label includes a packet type, an interface sequence, an indication field, and a fault field. If the packet type indicates that the packet is the reverse packet, the switch needs to check the fault field in the packet. The indication field indicates information that is about an outbound interface and that should be read from the interface sequence, and the fault field is combined with the interface sequence to indicate a faulty outbound interface on the source label forwarding path. When the switch is a switch (namely, the first device) that adds the source label to the original packet, the interface sequence indicates the first source label forwarding path of the original packet, and the switch processes the second packet according to the descriptions in step S350. When the switch is not the switch that adds the source label to the original packet, the switch processes the second packet according to step S460.

In step S460, the switch modifies the second packet, and forwards a modified second packet.

The switch determines an inbound interface that is of the second packet and that is on the switch, and determines, based on the value of the indication field, the information that is about the corresponding outbound interface and that is in the interface sequence, to further determine the outbound interface. Then, the switch modifies the information about the outbound interface to information about the inbound interface, and modifies the value of the indication field to a value that should be read by a next-hop switch, to obtain a modified second packet; and forwards the modified second packet through the outbound interface. Because the second packet is the reverse packet of the first packet, the next-hop device in this embodiment is a next hop when the second packet is forwarded to the source server. Modifying the value of the indication field to the value that should be read by the next-hop switch may be subtracting a set value from the value of the indication field, for example, subtracting 1 and 3 respectively from corresponding previous added values.

According to the method shown in FIG. 4, the switch not only can forward the packet to the destination server hop by hop based on the source label when an outbound interface is normal, but also can modify a normal packet to a reverse packet when the outbound interface is faulty, so that the reverse packet returns to the source server or the source access switch. When the outbound interface is faulty, the switch may alternatively reselect a normal outbound interface for the packet and forward the packet through the new outbound interface. According to the method shown in FIG. 4, a packet loss can be avoided when the packet is transmitted in the data center network.

Based on FIG. 3 and FIG. 4, the data center network shown in FIG. 1 in this application may be abstracted as a network including the first device and the second device. The first device is configured to implement the method shown in FIG. 3 and the implementations of the method, and the second device is configured to implement the method shown in FIG. 4 and the implementations of the method.

In the embodiments of this application, the methods shown in FIG. 3 and FIG. 4 can be combined, so that a packet can be forwarded between different servers in the data center network, and it can be ensured that a packet loss can be avoided in a fault scenario. As described above, the device that adds the source label may be the source server or the source access switch.

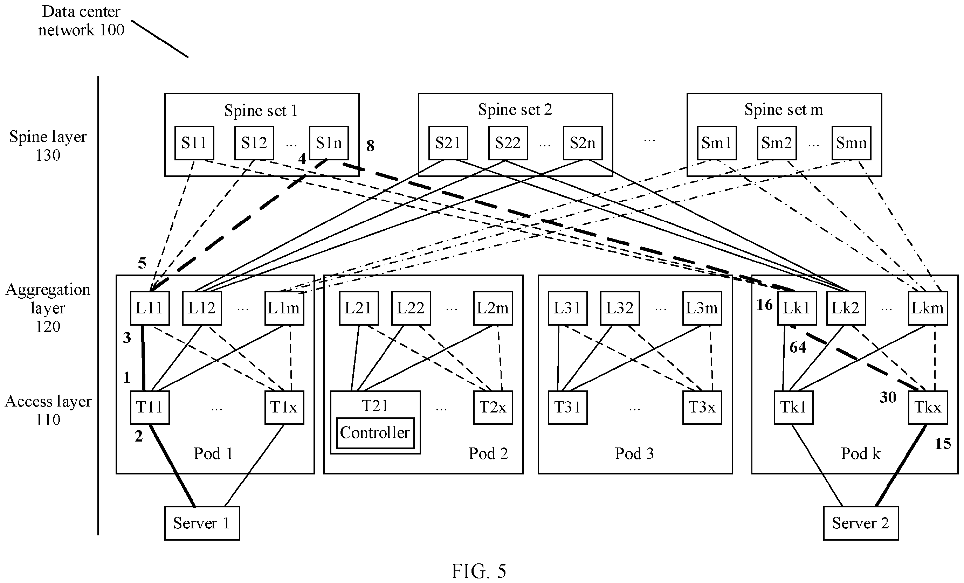

With reference to FIG. 5 to FIG. 7, the following describes implementation processes of the methods shown in FIG. 3 and FIG. 4 by using an example in which the server 1 in FIG. 1 forwards a packet to the server 2 and the server 1 adds a source label. It is assumed that a MAC address of the server 1 is 11:11:11:11:11:1:11, an IP address of the server 1 is 1.1.1.1, a MAC address of the server 2 is 22:22:22:22:22:22, and an IP address of the server 2 is 2.2.2.2. The server 1 obtains, through calculation based on a collected network topology, that a path between the server 1 and the server 2 is a path 1 marked by bold lines in FIG. 5, namely,
the server 1 -> the T11 (1) in the pod 1 -> the L11 (5) in the pod 1 -> the S1n (8) in the spine set 1 -> the Lk1 (64) in the pod k -> the Tkx (15) in the pod k -> the server 2............path 1

The number in the bracket indicates an identifier of an outbound interface of each switch on the path. For ease of description, the identifier of the outbound interface is referred to as the outbound interface for short in the following descriptions.

According to the foregoing definition of the forwarding path in this application, a forwarding path that corresponds to the server 2 and that is determined by the server 1 based on the path 1 is: the server 1 -> the T11(1) in the pod 1 -> the L11(5) in the pod 1 -> the S1n(8) in the spine set 1 -> the Lk1(64) in the pod k -> the Tkx(15) in the pod k. In this embodiment of this application, a source label path does not include an outbound interface of the server. Therefore, the source label path determined by the server 1 is: the T11 (1) in the pod 1 -> the L11 (5) in the pod 1 -> the S1n (8) in the spine set 1 -> the Lk1 (64) in the pod k. -> the Tkx in the pod k (15). In subsequent descriptions of this application, an original packet is marked by using a letter (A or B), and a packet that is obtained based on the original packet and that has same payload as the original packet is marked by using a combination of a letter and another identifier. When the server 1 forwards a packet A to the server 2, the server 1 adds, based on the forwarding path shown in FIG. 5, a source label shown in FIG. 6A to the packet A to obtain a packet A1.A forwarding type of the packet A1 is 0X8950, indicating that the packet A1 supports source label forwarding. An interface sequence of the packet A1 includes five interface fields, and each interface field corresponds to one outbound interface. A value of a hop count field of the packet A1 is set to 5, and each of values of an interface field 6 and an interface field 7 is empty or filled with any value. Because the packet A1 is a normal packet, a packet type is set to 0. An initial value of an ECN marker is 10 or 01, indicating that the packet A1 supports an ECN mechanism. A value of an indication field is modified with forwarding of the packet A1. According to setting, an initial value of the indication field may be 0, 1, or another number, and the initial value herein is set to 0. When forwarding the packet, a switch modifies the value of the indication field to a value that should be read by a next-hop switch. TTL may be set based on a requirement or not set. When the TTL is set, a value of the TTL decreases by 1 each time the packet is forwarded. When the value of the TTL becomes 0, the packet is discarded. To ensure that no packet is lost, the value of the TTL cannot be set to be extremely small. A fault field of the packet A1 is set to an initial value (herein, 0 is used as an example), indicating that the source label forwarding path is not faulty in this case. A forwarding mode of the packet A1 is 0, indicating that the interface sequence of the packet A1 carries an identifier of an outbound interface of each hop of switch. In addition, a version, a multicast feature, CoS, and the like in an extension header may also be set based on requirements. This is not limited in this application.

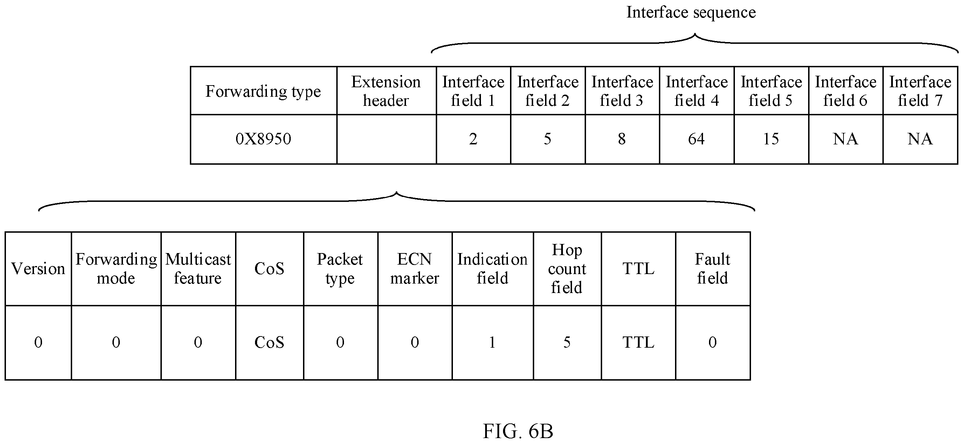

After generating the packet A1 including the source label shown in FIG. 6A, the server 1 sends the packet A1 to the ToR switch T11 connected to the server 1. After receiving the packet A1 from the server 1 through an interface 2, the T11 finds that the forwarding type of the packet A1 is 0X8950, and confirms that the packet A1 supports source label forwarding. The T11 determines that an outbound interface that is of the packet A1 and that is in the T11 is an interface 1 based on the value of the indication field in the source label and information that is about the outbound interface and that is in the interface sequence. The T11 obtains a status of the interface 1; when confirming that the interface 1 is normal, modifies a value of an interface field 1 to the interface 2 (an inbound interface), and modifies the value of the indication field to a value 1 that should be read by the next-hop switch L11, to obtain a packet A2. A source label of the packet A2 is shown in FIG. 6B. Then, the T11 forwards the packet A2 to the leaf switch L11 in the pod 1 through the interface 1.

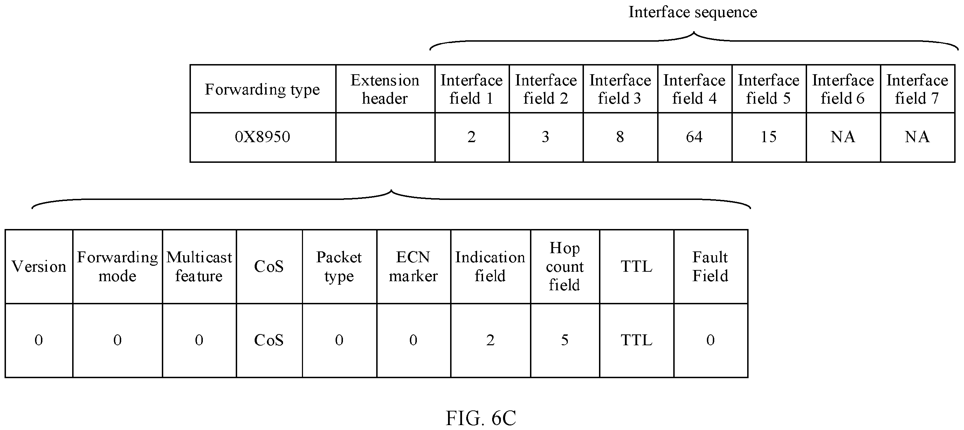

The L11 receives the packet A2 through an interface 3, and the L11 modifies the source label in the packet A2 to a source label shown in FIG. 6C (a value of an interface field 2 is modified to the interface 3, and the value of the indication field is modified to 2). After a packet A3 is obtained, the packet A3 is sent to the S1n in the spine set 1 through an interface 5 of the L11.

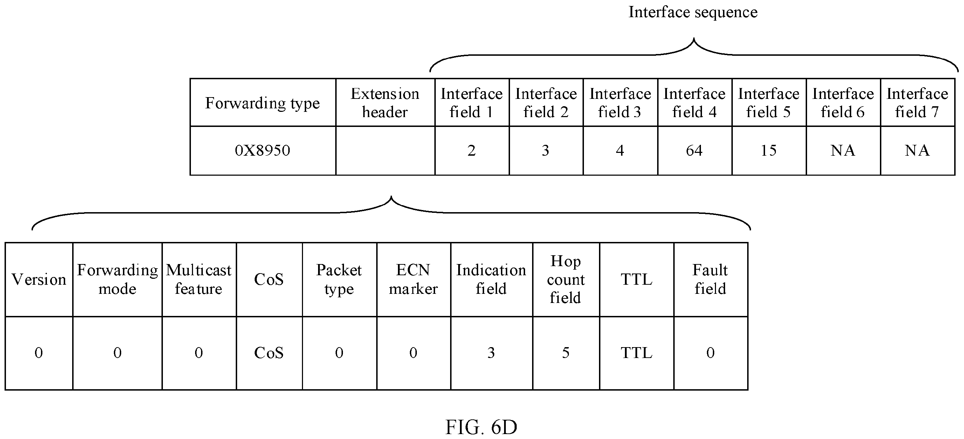

The S1n receives the packet A3 through an interface 4, and the S1n modifies the source label in the packet A3 to a source label shown in FIG. 6D (a value of an interface field 3 is modified to the interface 4, and the value of the indication field is modified to 3). After a packet A4 is obtained, the packet A4 is sent to the Lk1 in the pod k through an interface 8 of the S In.

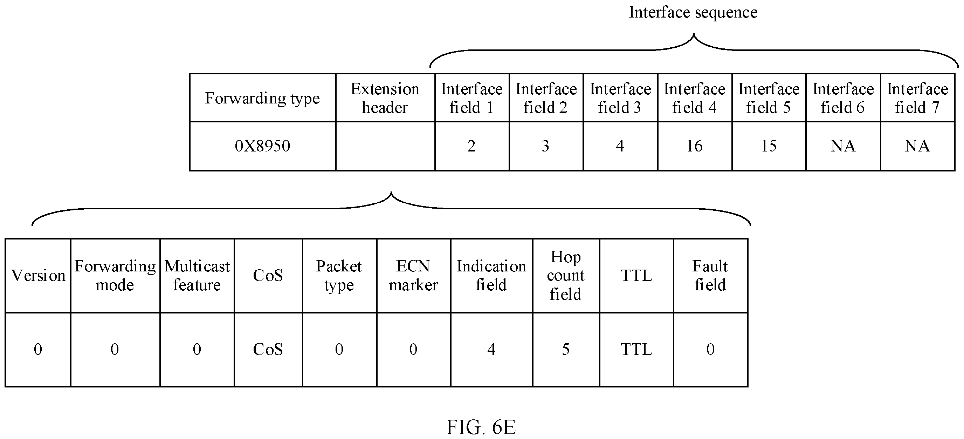

The Lk1 receives the packet A4 through an interface 16, and the Lk1 modifies the source label in the packet A4 to a source label shown in FIG. 6E (a value of an interface field 4 is modified to the interface 16, and the value of the indication field is modified to 4). After a packet A5 is obtained, the packet A5 is sent to the ToR switch Tkx in the pod k through an interface 64 of the Lk1.

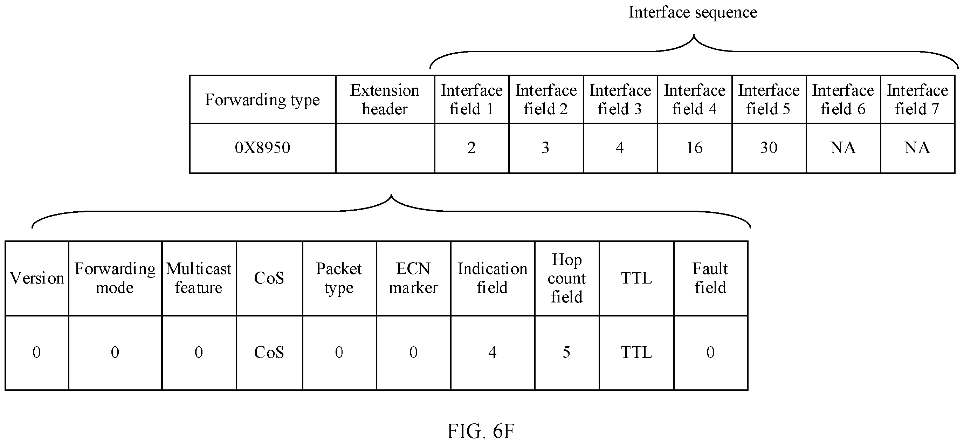

The Tkx receives the packet A5 through an interface 30, and the Tkx modifies the source label in the packet A5 to a source label shown in FIG. 6F (a value of an interface field 5 is modified to the interface 30). After a packet A6 is obtained, the packet A6 is sent to the server 2 through an interface 15 of the Tkx. After receiving the packet A6, the server 2 deletes the source label from the packet A6 to obtain the original packet A. Further, the server 2 may further store an interface sequence in the source label of the A6 and a source label forwarding path corresponding to the T11. For example, an outbound interface of the source label forwarding path corresponding to the T11 is the Tkx (30), the Lk1(160), the S1n(4), the L11 (3), and the T11 (2).

In the foregoing process, an example in which a status of each interface indicated by the interface sequence is normal is used to describe a forwarding process of the packet A. In the following descriptions, an example in which the server 1 sends a packet B through the path 1 is used to describe a packet forwarding procedure when an interface is faulty according to an embodiment of this application. When the server 1 forwards the packet B in manners shown in FIG. 5 and FIG. 6, the server 1 generates a packet B1, the packet B1 arrives at the T11, and the T11 modifies the packet B1 into a packet B2 and sends the packet B2 to the L11. The L11 modifies the packet B2 to a packet B3 and sends the packet B3 to the S1n. The S1n modifies the packet B3 to a packet B4 and sends the packet B4 to the Lk1. The Lk1 receives the packet B4 through the interface 16, where the packet B4 includes the source label shown in FIG. 6D. The Lk1 determines, based on the source label, that an outbound interface is the interface 64, further obtains a status of the interface 64, and finds that the interface 64 is faulty. In this case, the Lk1 may process the packet B4 in one of the following two manners:

Manner 1: Continue to send the packet B to the server 2. In this manner, the Lk1 selects an interface that has a same attribute (facing a destination server) as the interface 64, for example, an interface 52 (not shown in the figure). The source label in the packet B4 is modified to the source label shown in FIG. 6E (the value of the interface field 4 is modified to the interface 16, and the value of the indication field is modified to 4). After a packet B5 is obtained, the packet B5 is sent to the ToR switch Tkx in the pod k through the interface 52 of the Lk1. In this way, the Lk1 can bypass the faulty outbound interface 64, to ensure normal packet forwarding. Further, the Lk1 may further send a fault notification message to the server 1, to notify the server 1 that the interface 64 of the Lk1 is faulty, so that the server 1 avoids selecting a forwarding path including the outbound interface 64 when sending a subsequent packet to the server 2.

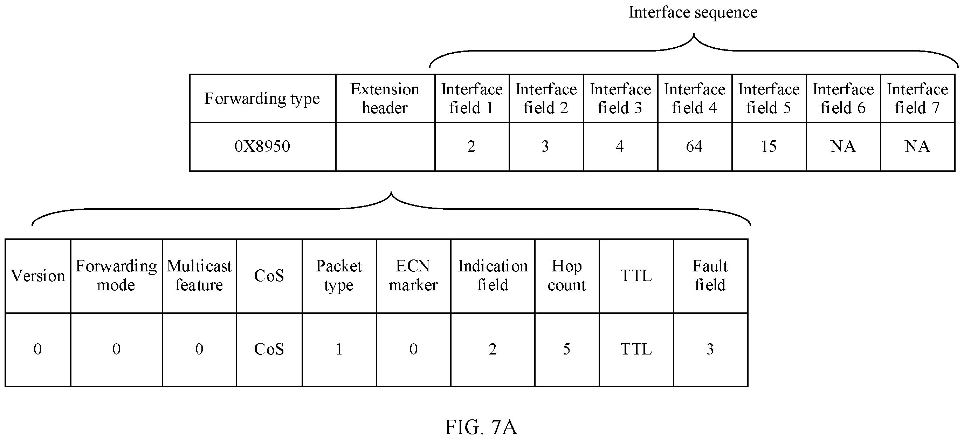

Manner 2: A reroute packet (reverse packet) of the packet B is sent to the server 1, so that the server 1 reselects a path to send the packet B. In this manner, the Lk1 modifies the packet B4, writes the value (3) of the indication field in FIG. 6D into a fault field, then modifies the value of the indication field to a value (2) that should be read by the next-hop switch S1n, sets a value of a packet type to 1, and exchanges a source MAC address and a destination MAC address of the packet B4 to obtain a modified packet B4' (namely, a reverse packet of the packet B4). A source label of the packet B4' is shown in FIG. 7A. The Lk1 sends the packet B4' to the S1n through the inbound interface 16 that is of the packet B4 and that is of the Lk1 device.

The forwarding type being 1 indicates that the packet B4' is a reroute packet. A person skilled in the art may alternatively use another value to indicate the reroute packet. The foregoing uses the Lk1 as an example to describe the operations performed when the outbound interface of the switch is faulty. Operations performed when an outbound interface of another switch is faulty are similar to those of the Lk1. To be specific, the packet is either forwarded through another outbound interface or the received packet is returned through an original path.

A switch that receives the reverse packet may also process the reroute packet in two manners. The following uses the spine switch S1n as an example. After receiving the packet B4' through the interface 8, the S1n may determine, based on the value 1 of the packet type in the packet B4', that the packet B4' is a reroute packet. For the reroute packet B4', the S In may have the following two processing manners.

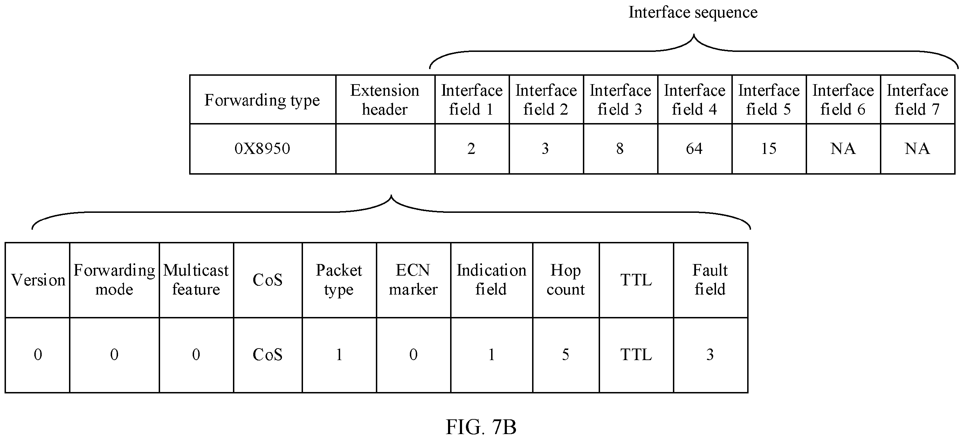

Manner 1: A reroute packet (reverse packet) is sent to the server 1, so that the server 1 reselects a path to send the packet B. In this manner, after receiving the packet B4', the S1n determines an inbound interface of the packet B4', namely, the interface 8, writes the interface 8 into a field (namely, the interface field 3) in the interface sequence corresponding to the indication field, and then modifies the value of the indication field to a value (1) that should be read by the next-hop switch L11, to obtain a packet B3'. A source label of the packet B3' is shown in FIG. 7B. The S1n forwards the packet B3' to the L11 through the outbound interface 4.

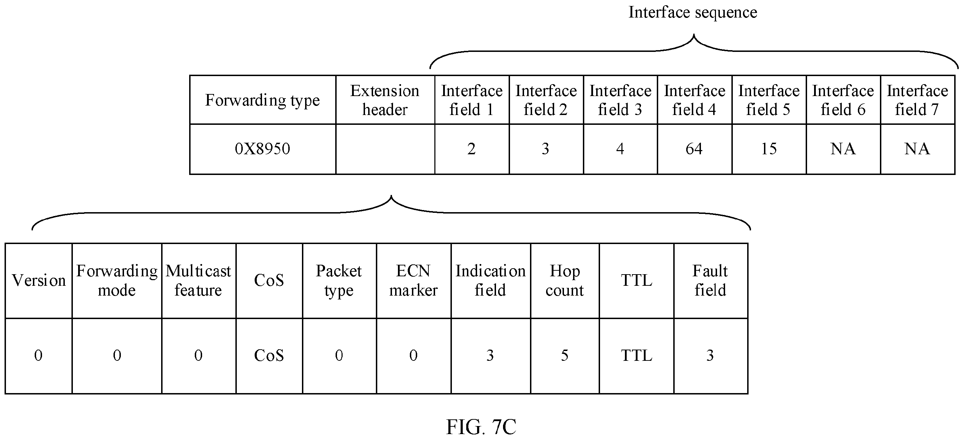

Manner 2: The S1n selects an outbound interface that has a same attribute as the interface 8 on the S1n, for example, an outbound interface 10. The S1n modifies the value of the packet type in the packet B4' to 0, exchanges a source MAC address and a destination MAC address in the packet B4', and modifies the value of the indication field to a value (3) that should be read by the next-hop switch Lk1 to obtain a packet B4". A source label of the packet B4" is shown in FIG. 7C. The S1n sends the packet B4" through the reselected outbound interface 10, to continue to send the packet B to the server 2.

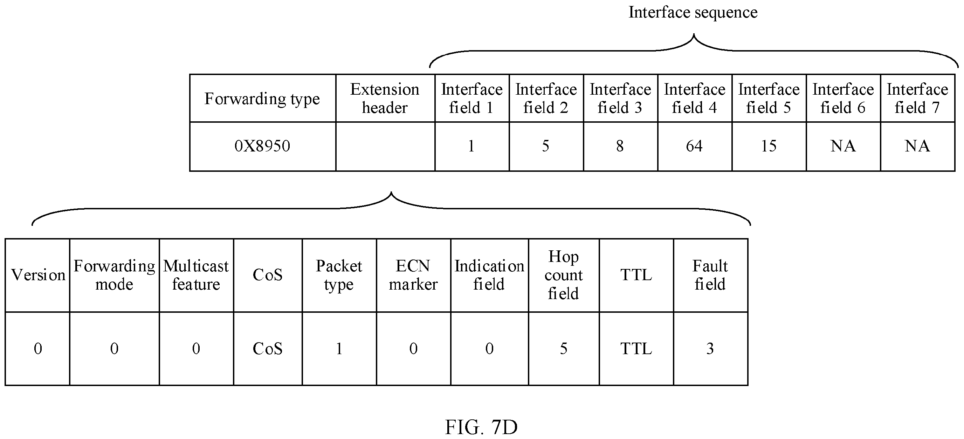

In an implementation, each switch that receives the reroute packet processes the packet in the foregoing manner 1. When a reroute packet B1' of the packet B arrives at the server 1, a source label of the reroute packet B1' received by the server 1 is shown in FIG. 7D. The server 1 may determine, based on a fact that a packet type of the packet B1' is 1 and a fault field is 3, that the outbound interface 64 corresponding to the interface field 4 is faulty. The server 1 exchanges a source MAC address and a destination MAC address in the packet B1', and determines a new forwarding path based on the exchanged destination MAC address. The new forwarding path does not include the outbound interface 64 of the Lk1. Then, the server 1 re-adds a new source label similar to that in FIG. 6A to the packet B1' based on the new forwarding path, to obtain a packet B1", where the packet B1" is a normal packet. The server 1 forwards the packet B 1" based on the new source label. Because the packet B1" and the packet B have same payload, sending the packet B1" is equivalent to sending the packet B again. Therefore, according to a reroute mechanism provided in this application, a packet is not lost even if a fault occurs in a network. In the foregoing embodiments provided in this application, the packet sending methods provided in the embodiments of the present invention are separately described from perspectives of the server and each switch. It may be understood that, to implement the foregoing functions, the server, the switch, and the like in the embodiments of this application include corresponding hardware structures and/or software modules for performing the functions. The person skilled in the art should be easily aware that functions and steps in the examples described in the embodiments disclosed in this application can be implemented in a form of hardware, a combination of hardware and computer software, or the like. Whether a function is performed by hardware or hardware driven by computer software depends on particular applications and design constraints of the technical solutions. The person skilled in the art may use different methods to implement the described functions for each particular application, but it should not be considered that the implementation goes beyond the scope of the present invention. The following describes structures of the server and the switch in this application from different perspectives.

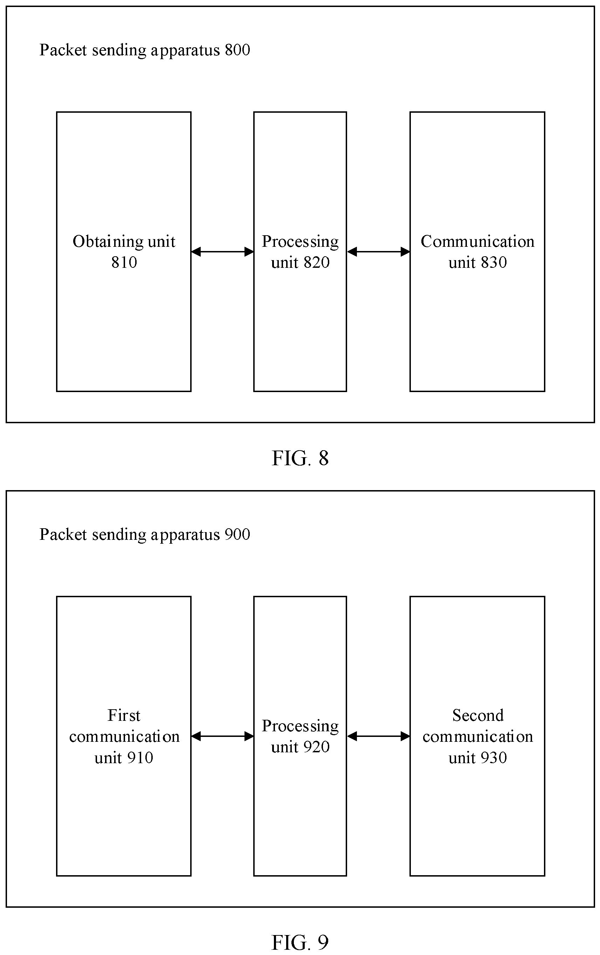

This application provides a packet sending apparatus 800. The apparatus 800 may be the first device in FIG. 3, namely, a server or an access switch. In addition to components shown in FIG. 8, the apparatus may further include other components to implement more functions.

As shown in FIG. 8, the apparatus 800 includes an obtaining unit 810, a processing unit 820, and a communication unit 830. The obtaining unit 810 is configured to perform step S310 and various implementations of step S310. The processing unit 820 is configured to perform step S320 and various implementations of step S320. The communication unit 830 is configured to perform step S330 and various implementations of step S330. Optionally, the communication unit 830 is further configured to perform step S340 and implementations of step S340. The processing unit 820 is further configured to perform step S350 and implementations of step S350. Optionally, the obtaining unit 810 and the communication unit 830 may independently implement respective functions, or perform corresponding functions under control of the processing unit 820.

In an implementation, the obtaining unit 810 is configured to obtain an original packet. The processing unit 820 is configured to add a first source label to the original packet to obtain a first packet, where the first source label includes a forwarding type, an indication field, and an interface sequence. The forwarding type indicates that the first packet supports source label forwarding, the interface sequence indicates a first source label forwarding path of the original packet, and the indication field indicates information that is about an outbound interface and that should be read from the interface sequence. The communication unit 830 is configured to send the first packet through an outbound interface corresponding to the first source label forwarding path.

Optionally, the first source label further includes a packet type and a fault field. The packet type indicates that the first packet is a normal packet, and a value of the fault field is a default value.

Optionally, the communication unit 830 is further configured to receive a second packet, where the second packet includes a second source label. The second source label includes a packet type, an interface sequence, and a fault field. The packet type indicates that the second packet is a fault reroute packet, the interface sequence indicates the first source label forwarding path, and the fault field is combined with the interface sequence to indicate a faulty outbound interface on the first source label forwarding path. The processing unit 820 is further configured to obtain the original packet based on the second packet, determine a second source label forwarding path of the original packet, generate a third source label based on the second source label forwarding path, and generate a third packet based on the original packet and the third source label. The second source label forwarding path does not include the faulty outbound interface. The communication unit 830 is further configured to send the third packet through an outbound interface corresponding to the second source label forwarding path.

Optionally, when adding the first source label to the original packet, the processing unit 820 is configured to: obtain information about a destination access switch corresponding to the original packet; determine, based on the information about the destination access switch, a first forwarding path corresponding to the destination access switch; determine the first source label forwarding path based on the first forwarding path and according to a first rule; generate the first source label based on the first source label forwarding path and according to a second rule; and add the first source label to the original packet.

Optionally, the apparatus 800 is a source access switch, the first forwarding path is a forwarding path from the source access switch to the destination access switch, and the first source label forwarding path is the first forwarding path. The obtaining unit 810 is configured to receive the original packet sent by a source server. The processing unit 820 is configured to: determine an inbound interface for receiving the original packet, and determine the outbound interface indicated by the indication field of the first packet; and modify the information that is about the outbound interface and that is in the interface sequence of the first packet to information about the inbound interface, and modify a value of the indication field to a value that should be read by a next-hop switch, to obtain a modified first packet. The communication unit 830 is configured to forward the modified first packet through the determined outbound interface.

Optionally, the apparatus 800 is a source access switch, the first forwarding path is a forwarding path from the source access switch to the destination access switch, and the first source label forwarding path does not include an outbound interface of the source access switch on the first forwarding path. The obtaining unit 810 is configured to receive the original packet sent by a source server. The communication unit 830 is configured to forward the first packet through the outbound interface of the source access switch on the first forwarding path.

Optionally, the apparatus 800 is a source server, the first forwarding path is a forwarding path from the source server to the destination access switch, and the first source label forwarding path does not include an outbound interface of the source server on the first forwarding path. The communication unit 830 is configured to forward the first packet through the outbound interface of the source server on the first forwarding path.

Correspondingly, this application further provides another packet sending apparatus 900, configured to process a received packet including a source label. The apparatus 900 may be any one of a ToR switch, a leaf switch, or a spine switch. As shown in FIG. 9, the apparatus 900 includes a first communication unit 910, a processing unit 920, and a second communication unit 930. The first communication unit 910 is configured to perform step S410 and various implementations of step S410. The processing unit 920 is configured to perform steps S420 to S440 and various implementations of S420 to S440. The second communication unit 930 may be configured to receive the packet or send the packet. Optionally, the first communication unit 910 and the second communication unit 930 may independently implement respective functions, or perform corresponding functions under control of the processing unit 920.

In an implementation, the first communication unit 910 is configured to receive a first packet, where the first packet is obtained by adding a first source label to an original packet. The first source label includes a forwarding type, an indication field, and an interface sequence. The forwarding type indicates that the first packet supports source label forwarding, the interface sequence indicates a source label forwarding path of the original packet, and the indication field indicates information that is about an outbound interface and that should be read from the interface sequence. The processing unit 920 is configured to send the first packet based on the first source label.

Optionally, when sending the first packet, the processing unit 920 is configured to: determine the outbound interface indicated by the indication field; obtain a status of the outbound interface; and send the first packet based on the status of the outbound interface.

Optionally, the processing unit 920 is configured to: determine an inbound interface for receiving the first packet; when the status of the outbound interface is normal, modify the information that is about the outbound interface and that is in the interface sequence to information about the inbound interface, and modify a value of the indication field to a value that should be read by a next-hop switch, to obtain a modified first packet; and forward the modified first packet to the next-hop switch through the outbound interface.

Optionally, the first packet further includes a source address and a destination address, and the first source label further includes a packet type and a fault field. The processing unit 920 is configured to: determine an inbound interface for receiving the first packet; when the status of the outbound interface is faulty, write a value of the indication field into the fault field, then modify the value of the indication field to a value that should be read by a next-hop switch, modify the packet type to fault reroute, and exchange the source address and the destination address of the first packet, to obtain a reverse packet of the first packet; and forward the reverse packet through the inbound interface.

Optionally, the processing unit 920 is configured to: determine an inbound interface for receiving the first packet; when the status of the outbound interface is faulty, determine a new outbound interface having a same direction as the outbound interface; modify the information that is about the faulty outbound interface and that is in the interface sequence to information about the inbound interface, and modify a value of the indication field to a value that should be read by a next-hop switch, to obtain a modified first packet; and forward the modified first packet to the next-hop switch through the new outbound interface.

Optionally, the apparatus 900 is a last-hop switch of the source label forwarding path, and the processing unit 920 is configured to: determine an inbound interface for receiving the first packet; when the status of the outbound interface is normal, modify the information that is about the outbound interface and that is in the interface sequence to information about the inbound interface, to obtain a modified first packet; and forward the modified first packet to a destination server of the original packet through the outbound interface.

Optionally, the apparatus 900 is a last-hop switch of the source label forwarding path, and the processing unit 920 is configured to: when the status of the outbound interface is normal, delete the first source label from the first packet to obtain the original packet; and send the original packet to a destination server of the original packet through the outbound interface.

Optionally, the first source label further includes a forwarding mode, and the forwarding mode indicates a manner of determining the outbound interface. When the forwarding mode is direct forwarding, the information in the interface sequence is outbound interface identifiers, and the processing unit 920 is configured to: obtain, from the interface sequence, an outbound interface identifier corresponding to the indication field, and determine, based on the outbound interface identifier, the outbound interface indicated by the indication field. When the forwarding mode is table lookup forwarding, the information in the interface sequence is outbound interface indexes, and the processing unit 920 is configured to: obtain, from the interface sequence, an outbound interface index corresponding to the indication field, search for a mapping table based on the index to obtain an identifier of the outbound interface, and determine, based on the outbound interface identifier, the outbound interface indicated by the indication field.

Optionally, the second communication unit 930 is configured to receive a second packet, where the second packet is a reverse packet of the first packet. The second packet includes a second source label, and the second source label includes an interface sequence, an indication field, and a fault field. The indication field indicates information that is about an outbound interface and that should be read from the interface sequence, and the fault field is combined with the interface sequence to indicate a faulty outbound interface on the source label forwarding path. The processing unit 920 is further configured to determine an inbound interface for receiving the second packet; determine the outbound interface indicated by the indication field; modify the information that is about the outbound interface and that is in the interface sequence to information about the inbound interface, and modify a value of the indication field to a value that should be read by a next-hop switch, to obtain a modified second packet; and forward the modified second packet to the next-hop switch through the determined outbound interface.

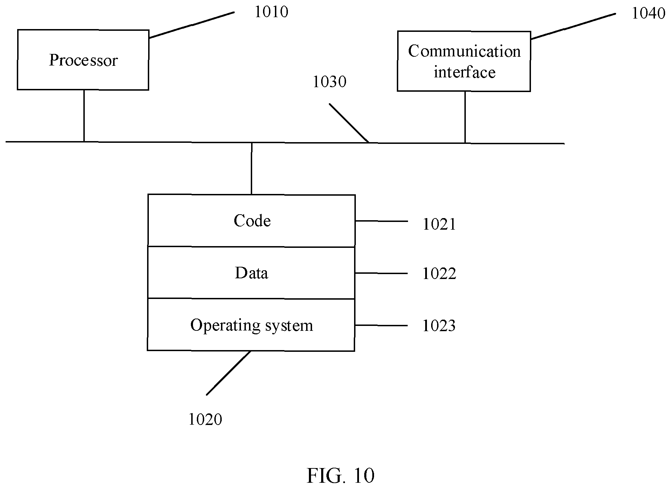

This application further provides a packet sending apparatus 1000. The apparatus 1000 may be any server or switch in FIG. 1. As shown in FIG. 10, the apparatus 1000 may include a processor 1010, a memory 1020, and a bus system 1030. The processor 1010 is connected to the memory 1020 through the bus system 1030. The memory 1020 is configured to store program code, and the processor 1010 is configured to execute the program code stored in the memory 1020. For example, the processor 1010 may invoke the program code stored in the memory 1020 to perform the packet sending method performed by the server or the switch in the embodiments of this application.

In the embodiment of this application, the processor 1010 may be a central processing unit (CPU). Alternatively, the processor 1010 may be another general-purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor or the like. The processor 1010 may include one or more processing cores.

The memory 1020 may include a read-only memory (ROM) device or a random-access memory (RAM) device. Any other suitable type of storage device may also be used as the memory 1020. The memory 1020 may include data 1022 accessed by the processor 1010 through the bus 1030. The memory 1020 may further include an operating system 1023, to support operation of the apparatus 1000.

The bus system 1030 may further include a power bus, a control bus, a status signal bus, and the like, in addition to a data bus. However, for clear description, various types of buses in the figure are marked as the bus system 1030.

Optionally, the apparatus 1000 may further include one or more output devices, for example, a communication interface 1040. The apparatus 1000 may communicate with another device through the communication interface 1040. The communication interface 1040 may be connected to the processor 1010 through the bus system 1030.

Based on the foregoing descriptions of the embodiments, a person skilled in the art may clearly understand that the present invention may be implemented by hardware or by software in addition to a necessary general-purpose hardware platform. Based on such an understanding, technical solutions of the present invention may be embodied in a form of a hardware product or a software product. The hardware product may be a dedicated chip. The software product may be stored in a non-volatile storage medium (which may be a CD-ROM, a USB flash drive, a removable hard disk, or the like), and includes several instructions for instructing a computer device (which may be a personal computer, a server, a network device, or the like) to perform the methods described in the embodiments of the present invention.

The foregoing descriptions are merely preferred implementations of the present invention. It should be noted that a person of ordinary skill in the art may further make several improvements and polishing without departing from the principle of the present invention and the improvements and polishing shall fall within the protection scope of the present invention.

## Claims

1. A packet sending method, comprising:
obtaining an original packet;
adding a first source label to the original packet to obtain a first packet, wherein the first source label comprises a forwarding type, an indication field, and an interface sequence, the forwarding type indicates that the first packet supports source label forwarding, the interface sequence indicates a first source label forwarding path of the original packet, and the indication field indicates information that is about an outbound interface and that should be read from the interface sequence; and
sending the first packet through an outbound interface corresponding to the first source label forwarding path.

2. The method according to claim 1, wherein the first source label further comprises a packet type and a fault field, the packet type indicates that the first packet is a normal packet, and a value of the fault field is a default value.

3. The method according to claim 2, wherein the method further comprises:
receiving a second packet, wherein the second packet comprises a second source label, the second source label comprises a packet type, an interface sequence, and a fault field, the packet type indicates that the second packet is a fault reroute packet, the interface sequence indicates the first source label forwarding path, and the fault field is combined with the interface sequence to indicate a faulty outbound interface on the first source label forwarding path;
obtaining the original packet based on the second packet, and determining a second source label forwarding path of the original packet, wherein the second source label forwarding path does not comprise the faulty outbound interface;
generating a third source label based on the second source label forwarding path, and generating a third packet based on the original packet and the third source label; and
sending the third packet through an outbound interface corresponding to the second source label forwarding path.

4. The method according to any one of claims 1 to 3, wherein the adding a first source label to the original packet comprises:
obtaining information about a destination access switch corresponding to the original packet;
determining, based on the information about the destination access switch, a first forwarding path corresponding to the destination access switch;
determining the first source label forwarding path based on the first forwarding path and according to a first rule;
generating the first source label based on the first source label forwarding path and according to a second rule; and
adding the first source label to the original packet.

5. The method according to claim 4, wherein the method is executed by a source access switch, the first forwarding path is a forwarding path from the source access switch to the destination access switch, and the first source label forwarding path is the first forwarding path;
the obtaining an original packet comprises: receiving, by the source access switch, the original packet sent by a source server; and
the sending the first packet through the outbound interface corresponding to the first source label forwarding path comprises: determining, by the source access switch, an inbound interface for receiving the original packet, and determining the outbound interface indicated by the indication field of the first packet; modifying the information that is about the outbound interface and that is in the interface sequence of the first packet to information about the inbound interface, and modifying a value of the indication field to a value that should be read by a next-hop switch, to obtain a modified first packet; and forwarding the modified first packet through the determined outbound interface.

6. The method according to claim 4, wherein the method is executed by a source access switch, the first forwarding path is a forwarding path from the source access switch to the destination access switch, and the first source label forwarding path does not comprise an outbound interface of the source access switch on the first forwarding path;
the obtaining an original packet comprises: receiving, by the source access switch, the original packet sent by a source server; and
the sending the first packet through the outbound interface corresponding to the first source label forwarding path comprises: forwarding, by the source access switch, the first packet through the outbound interface of the source access switch on the first forwarding path.

7. The method according to claim 4, wherein the method is executed by a source server, the first forwarding path is a forwarding path from the source server to the destination access switch, and the first source label forwarding path does not comprise an outbound interface of the source server on the first forwarding path;
the obtaining an original packet comprises: obtaining, by the source server, the original packet; and
the sending the first packet through the outbound interface corresponding to the first source label forwarding path comprises: forwarding the first packet through the outbound interface of the source server on the first forwarding path.

8. A packet sending method, comprising:
receiving a first packet, wherein the first packet is obtained by adding a first source label to an original packet, the first source label comprises a forwarding type, an indication field, and an interface sequence, the forwarding type indicates that the first packet supports source label forwarding, the interface sequence indicates a source label forwarding path of the original packet, and the indication field indicates information that is about an outbound interface and that should be read from the interface sequence; and
sending the first packet based on the first source label.

9. The method according to claim 8, wherein the sending the first packet based on the first source label comprises:
determining the outbound interface indicated by the indication field;
obtaining a status of the outbound interface; and
sending the first packet based on the status of the outbound interface.

10. The method according to claim 9, wherein the method further comprises: determining an inbound interface for receiving the first packet; and
the sending the first packet based on the status of the outbound interface comprises:
when the status of the outbound interface is normal, modifying the information that is about the outbound interface and that is in the interface sequence to information about the inbound interface, and modifying a value of the indication field to a value that should be read by a next-hop switch, to obtain a modified first packet; and
forwarding the modified first packet to the next-hop switch through the outbound interface.

11. The method according to claim 9, wherein the first packet further comprises a source address and a destination address, the first source label further comprises a packet type and a fault field, and the method further comprises:
determining an inbound interface for receiving the first packet; and
the sending the first packet based on the status of the outbound interface comprises:
when the status of the outbound interface is faulty, writing a value of the indication field into the fault field, then modifying the value of the indication field to a value that should be read by a next-hop switch, modifying the packet type to fault reroute, and exchanging the source address and the destination address of the first packet, to obtain a reverse packet of the first packet; and
forwarding the reverse packet through the inbound interface.

12. The method according to claim 9, wherein the method further comprises: determining an inbound interface for receiving the first packet; and
the sending the first packet based on the status of the outbound interface comprises:
when the status of the outbound interface is faulty, determining a new outbound interface having a same direction as the outbound interface;
modifying the information that is about the faulty outbound interface and that is in the interface sequence to information about the inbound interface, and modifying a value of the indication field to a value that should be read by a next-hop switch, to obtain a modified first packet; and
forwarding the modified first packet to the next-hop switch through the new outbound interface.

13. The method according to claim 9, wherein the method further comprises: determining an inbound interface for receiving the first packet; and
the sending the first packet based on the status of the outbound interface comprises:
when the status of the outbound interface is normal, modifying the information that is about the outbound interface and that is in the interface sequence to information about the inbound interface, to obtain a modified first packet; and
forwarding the modified first packet to a destination server of the original packet through the outbound interface.

14. The method according to claim 9, wherein the sending the first packet based on the status of the outbound interface comprises:
when the status of the outbound interface is normal, deleting the first source label from the first packet to obtain the original packet; and
sending the original packet to a destination server of the original packet through the outbound interface.

15. The method according to any one of claims 9 to 14, wherein the first source label further comprises a forwarding mode, and the forwarding mode indicates a manner of determining the outbound interface; and
when the forwarding mode is direct forwarding, the information in the interface sequence is outbound interface identifiers, and the determining the outbound interface indicated by the indication field comprises: obtaining, from the interface sequence, an outbound interface identifier corresponding to the indication field, and determining, based on the outbound interface identifier, the outbound interface indicated by the indication field; or
when the forwarding mode is table lookup forwarding, the information in the interface sequence is outbound interface indexes, and the determining the outbound interface indicated by the indication field comprises: obtaining, from the interface sequence, an outbound interface index corresponding to the indication field, searching for a mapping table based on the index to obtain an outbound interface identifier, and determining, based on the outbound interface identifier, the outbound interface indicated by the indication field.

16. The method according to claim 8 or 9, further comprising:
receiving a second packet, wherein the second packet is a reverse packet of the first packet, the second packet comprises a second source label, the second source label comprises an interface sequence, an indication field, and a fault field, the indication field indicates information that is about an outbound interface and that should be read from the interface sequence, and the fault field is combined with the interface sequence to indicate a faulty outbound interface on the source label forwarding path;
determining an inbound interface for receiving the second packet;
determining the outbound interface indicated by the indication field;
modifying the information that is about the outbound interface and that is in the interface sequence to information about the inbound interface, and modifying a value of the indication field to a value that should be read by a next-hop switch, to obtain a modified second packet; and
forwarding the modified second packet to the next-hop switch through the determined outbound interface.

17. A packet sending apparatus, comprising:
an obtaining unit, configured to obtain an original packet;
a processing unit, configured to add a first source label to the original packet to obtain a first packet, wherein the first source label comprises a forwarding type, an indication field, and an interface sequence, the forwarding type indicates that the first packet supports source label forwarding, the interface sequence indicates a first source label forwarding path of the original packet, and the indication field indicates information that is about an outbound interface and that should be read from the interface sequence; and
a communication unit, configured to send the first packet through an outbound interface corresponding to the first source label forwarding path.

18. The apparatus according to claim 17, wherein the first source label further comprises a packet type and a fault field, the packet type indicates that the first packet is a normal packet, and a value of the fault field is a default value.

19. The apparatus according to claim 18, wherein
the communication unit is further configured to receive a second packet, wherein the second packet comprises a second source label, the second source label comprises a packet type, an interface sequence, and a fault field, the packet type indicates that the second packet is a fault reroute packet, the interface sequence indicates the first source label forwarding path, and the fault field is combined with the interface sequence to indicate a faulty outbound interface on the first source label forwarding path;
the processing unit is further configured to obtain the original packet based on the second packet, determine a second source label forwarding path of the original packet, generate a third source label based on the second source label forwarding path, and generate a third packet based on the original packet and the third source label, wherein the second source label forwarding path does not comprise the faulty outbound interface; and
the communication unit is further configured to send the third packet through an outbound interface corresponding to the second source label forwarding path.

20. The apparatus according to any one of claims 17 to 19, wherein when adding the first source label to the original packet, the processing unit is configured to:
obtain information about a destination access switch corresponding to the original packet;
determine, based on the information about the destination access switch, a first forwarding path corresponding to the destination access switch;
determine the first source label forwarding path based on the first forwarding path and according to a first rule;
generate the first source label based on the first source label forwarding path and according to a second rule; and
add the first source label to the original packet.

21. The apparatus according to claim 20, wherein the apparatus is a source access switch, the first forwarding path is a forwarding path from the source access switch to the destination access switch, and the first source label forwarding path is the first forwarding path;
the obtaining unit is configured to receive the original packet sent by a source server;
the processing unit is configured to: determine an inbound interface for receiving the original packet, and determine the outbound interface indicated by the indication field of the first packet; and modify the information that is about the outbound interface and that is in the interface sequence of the first packet to information about the inbound interface, and modify a value of the indication field to a value that should be read by a next-hop switch, to obtain a modified first packet; and
the communication unit is configured to forward the modified first packet through the determined outbound interface.

22. The apparatus according to claim 20, wherein the apparatus is a source access switch, the first forwarding path is a forwarding path from the source access switch to the destination access switch, and the first source label forwarding path does not comprise an outbound interface of the source access switch on the first forwarding path;
the obtaining unit is configured to receive the original packet sent by a source server; and
the communication unit is configured to forward the first packet through the outbound interface of the source access switch on the first forwarding path.

23. The apparatus according to claim 20, wherein the apparatus is a source server, the first forwarding path is a forwarding path from the source server to the destination access switch, and the first source label forwarding path does not comprise an outbound interface of the source server on the first forwarding path; and
the communication unit is configured to forward the first packet through the outbound interface of the source server on the first forwarding path.

24. A packet sending apparatus, comprising a first communication unit and a processing unit, wherein
the first communication unit is configured to receive a first packet, wherein the first packet is obtained by adding a first source label to an original packet, the first source label comprises a forwarding type, an indication field, and an interface sequence, the forwarding type indicates that the first packet supports source label forwarding, the interface sequence indicates a source label forwarding path of the original packet, and the indication field indicates information that is about an outbound interface and that should be read from the interface sequence; and
the processing unit is configured to send the first packet based on the first source label.

25. The apparatus according to claim 24, wherein when sending the first packet, the processing unit is configured to:
determine the outbound interface indicated by the indication field;
obtain a status of the outbound interface; and
send the first packet based on the status of the outbound interface.

26. The apparatus according to claim 25, wherein the processing unit is configured to:
determine an inbound interface for receiving the first packet;
when the status of the outbound interface is normal, modify the information that is about the outbound interface and that is in the interface sequence to information about the inbound interface, and modify a value of the indication field to a value that should be read by a next-hop switch, to obtain a modified first packet; and
forward the modified first packet to the next-hop switch through the outbound interface.

27. The apparatus according to claim 25, wherein the first packet further comprises a source address and a destination address, the first source label further comprises a packet type and a fault field, and the processing unit is configured to:
determine an inbound interface for receiving the first packet;
when the status of the outbound interface is faulty, write a value of the indication field into the fault field, then modify the value of the indication field to a value that should be read by a next-hop switch, modify the packet type to fault reroute, and exchange the source address and the destination address of the first packet, to obtain a reverse packet of the first packet; and
forward the reverse packet through the inbound interface.

28. The apparatus according to claim 25, wherein the processing unit is configured to:
determine an inbound interface for receiving the first packet;
when the status of the outbound interface is faulty, determine a new outbound interface having a same direction as the outbound interface;
modify the information that is about the faulty outbound interface and that is in the interface sequence to information about the inbound interface, and modify a value of the indication field to a value that should be read by a next-hop switch, to obtain a modified first packet; and
forward the modified first packet to the next-hop switch through the new outbound interface.

29. The apparatus according to claim 25, wherein the apparatus is a last-hop switch of the source label forwarding path, and the processing unit is configured to:
determine an inbound interface for receiving the first packet;
when the status of the outbound interface is normal, modify the information that is about the outbound interface and that is in the interface sequence to information about the inbound interface, to obtain a modified first packet; and
forward the modified first packet to a destination server of the original packet through the outbound interface.

30. The apparatus according to claim 25, wherein the apparatus is a last-hop switch of the source label forwarding path, and the processing unit is configured to:
when the status of the outbound interface is normal, delete the first source label from the first packet to obtain the original packet; and
send the original packet to a destination server of the original packet through the outbound interface.

31. The apparatus according to any one of claims 25 to 30, wherein the first source label further comprises a forwarding mode, and the forwarding mode indicates a manner of determining the outbound interface; and
when the forwarding mode is direct forwarding, the information in the interface sequence is outbound interface identifiers, and the processing unit is configured to: obtain, from the interface sequence, an outbound interface identifier corresponding to the indication field, and determine, based on the outbound interface identifier, the outbound interface indicated by the indication field; or
when the forwarding mode is table lookup forwarding, the information in the interface sequence is outbound interface indexes, and the processing unit is configured to: obtain, from the interface sequence, an outbound interface index corresponding to the indication field, search for a mapping table based on the index to obtain an outbound interface identifier, and determine, based on the outbound interface identifier, the outbound interface indicated by the indication field.

32. The apparatus according to claim 24 or 25, further comprising a second communication unit, wherein
the second communication unit is configured to receive a second packet, wherein the second packet is a reverse packet of the first packet, the second packet comprises a second source label, the second source label comprises an interface sequence, an indication field, and a fault field, the indication field indicates information that is about an outbound interface and that should be read from the interface sequence, and the fault field is combined with the interface sequence to indicate a faulty outbound interface on the source label forwarding path; and
the processing unit is further configured to: determine an inbound interface for receiving the second packet, and determine the outbound interface indicated by the indication field; modify the information that is about the outbound interface and that is in the interface sequence to information about the inbound interface, and modify a value of the indication field to a value that should be read by a next-hop switch, to obtain a modified second packet; and forward the modified second packet to the next-hop switch through the determined outbound interface.

33. A data center network, comprising a first device and a second device, wherein the first device is the apparatus according to any one of claims 17 to 23, and the second device is the apparatus according to any one of claims 24 to 32.

34. A storage medium, wherein the storage medium stores program code, and when the program code is run on a computer, the computer is enabled to perform the method according to any one of claims 1 to 16.
